# EUROPEAN PATENT APPLICATION

(11) **EP 3 597 509 A1**
(43) Date of publication of application: **22.01.2020**
(21) Application number: 18768221.6
(22) Date of filing: 14.03.2018
(51) Int. Cl.: B62D 6/00, B62D 5/04, B62D 101/00, B62D 113/00, B62D 117/00, B62D 119/00

(54) **ELECTRIC POWER STEERING DEVICE**

(30) Priority: 15.03.2017 JP 2017049883; 17.03.2017 JP 2017052959; 17.03.2017 JP 2017052960; 17.03.2017 JP 2017052961
(71) Applicant: NSK Ltd., Tokyo 141-8560 (JP)
(72) Inventor: TSUBAKI, Takahiro, Maebashi-shi Gunma 371-8527 (JP); KIKUTA, Tomoyuki, Maebashi-shi Gunma 371-8527 (JP)
(74) Representative: Hoffmann Eitle
(86) International application number: PCT/JP2018/009880
(87) International publication number: WO 2018/168897

(57) **Abstract**

[Problem]

An object of the present invention is to provide an electric power steering apparatus that achieves a manual steering even if a steering intervention is per formed by a driver during an automatic steering, ensures more safety when the driver steers urgently, and enables both the assist control and the steering angle control.

[Means for solving the problem]

The electric power steering apparatus comprises a steering angle control section that calculates a steering angle control current command value for the steering angle control based on at least a steering angle command value and an actual steering angle, and a switch judging and gradual-change gain generating section that judges a steering state based on a manual input judgment and performs a switch of the steering state; wherein the steering angle control section comprises a filter section that converts a steering angular velocity command value calculated from at least the steering angle command value and the actual steering angle into an extended steering angular velocity command value, and the steering angle control section calculates the steering angle control current command value based on the extended steering angular velocity command value and an actual steering angular velocity; wherein the switch judging and gradual-change gain generating section comprises a manual input judging section that performs the manual input judgment to a steering torque by using a threshold; and wherein the electric power steering apparatus calculates the current command value by using at least the steering angle control current command value.

## Description

### Technical Field

The present invention relates to an electric power steering apparatus that enables an automatic steering by performing an assist control and a steering angle control to a steering system by driving and controlling a motor based on a current command value, and in particular to an electric power steering apparatus that enables a safety and a reduction of uncomfortable feeling even if a steering intervention is per formed by a driver during the automatic steering .

### Background Art

An electric power steering apparatus (EPS) which provides a steering system of a vehicle with a steering assist torque (an assist torque) by means of a rotational torque of a motor, applies a driving force of the motor as the steering assist torque to a steering shaft or a rack shaft by means of a transmission mechanism such as gears or a belt through a reduction mechanism, and performs an assist control. In order to accurately generate the assist torque, such a conventional electric power steering apparatus performs a feed-back control of a motor current. The feed-back control adjusts a voltage supplied to the motor so that a difference between a steering assist command value (a current command value) and a detected motor current value becomes small, and the adjustment of the voltage supplied to the motor is generally performed by an adjustment of a duty ratio of a pulse width modulation (PWM) control.

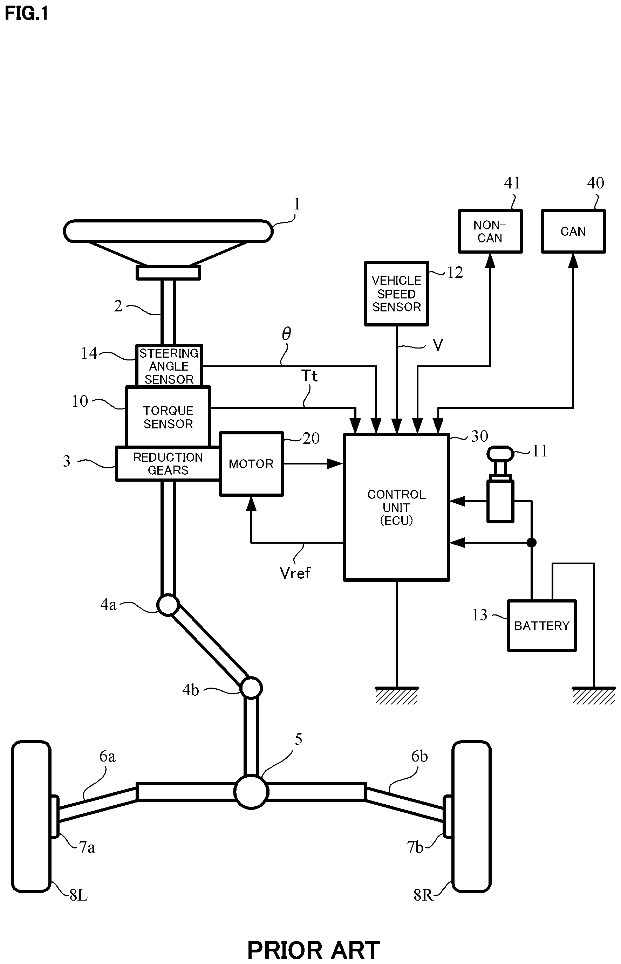

A general configuration of the conventional electric power steering apparatus will be described with reference to FIG.1. As shown in FIG.1, a column shaft (a steering shaft or a handle shaft) 2 connected to a handle (a steering wheel) 1 is connected to steered wheels 8L and 8R through reduction gears (wormgears) 3 constituting the reduction mechanism, universal joints 4a and 4b, a rack-and-pinion mechanism 5, and tie rods 6a and 6b, further via hub units 7a and 7b. In addition, a torsion bar is inserted into the column shaft 2, for which a steering angle sensor 14 for detecting a steering angle θ of the handle 1 by means of a twist angle of the torsion bar and a torque sensor 10 for detecting a steering torque Tt are provided, and a motor 20 for assisting a steering force of the handle 1 is connected to the column shaft 2 through the reduction gears 3. The electric power is supplied to a control unit (ECU) 30 for controlling the electric power steering apparatus from a battery 13, and an ignition key signal is inputted into the control unit 30 through an ignition key 11. The control unit 30 calculates a current command value of an assist control command based on the steering torque Tt detected by the torque sensor 10 and a vehicle speed V detected by a vehicle speed sensor 12, and controls a current supplied to the motor 20 by means of a voltage control command value Vref obtained by performing a compensation or the like to the current command value.

As well, the steering angle sensor 14 is not essential, it does not need to be provided, and it is possible to obtain the steering angle from a rotational angle sensor such as a resolver connected to the motor 20.

A controller area network (CAN) 40 exchanging various information of a vehicle is connected to the control unit 30, and it is possible to receive the vehicle speed V from the CAN 40. Further, it is also possible to connect a non-CAN 41 exchanging a communication, analog/digital signals, a radio wave or the like except with the CAN 40 to the control unit 30.

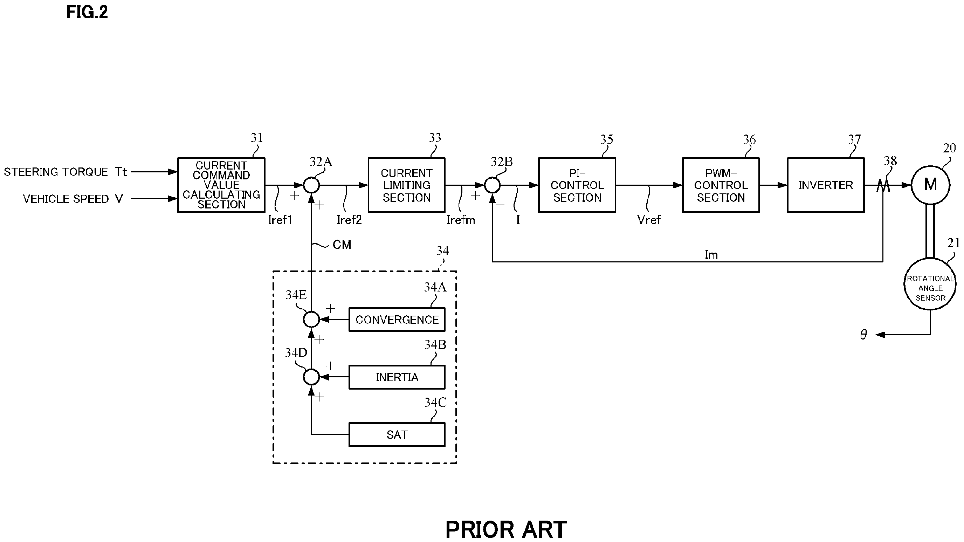

The control unit 30 mainly comprises a CPU (Central Processing Unit) (including an MPU (Micro Processor Unit), an MCU (Micro Controller Unit) and so on), and general functions performed by programs within the CPU are shown in FIG.2.

The control unit 30 will be described with reference to FIG.2. As shown in FIG.2, the steering torque Tt detected by the torque sensor 10 and the vehicle speed V detected by the vehicle speed sensor 12 (or from the CAN 40) are inputted into a current command value calculating section 31 that calculates a current command value Iref1. The current command value calculating section 31 calculates the current command value Iref1 that is a control target value of a current supplied to the motor 20 based on the inputted steering torque Tt and vehicle speed V and by using an assist map or the like. The current command value Iref1 is inputted into a current limiting section 33 through an adding section 32A. A current command value Irefm the maximum current of which is limited is inputted into a subtracting section 32B, and a deviation I (= Irefm - Im) between the current command value Irefm and a motor current Im being fed back is calculated. The deviation I is inputted into a proportional integral (PI) control section 35 for improving a characteristic of the steering operation. The voltage control command value Vref whose characteristic is improved by the PI-control section 35 is inputted into a PWM-control section 36. Furthermore, the motor 20 is PWM-driven through an inverter 37. The motor current Im of the motor 20 is detected by a motor current detector 38 and is fed back to the subtracting section 32B. The inverter 37 is comprised of a bridge circuit of field effect transistors (FETs) as semiconductor switching elements.

A rotational angle sensor 21 such as a resolver is connected to the motor 20, and a rotational angle θ is detected and outputted by the rotational angle sensor 21.

Further, a compensation signal CM from a compensation signal generating section 34 is added to the adding section 32A, and a characteristic compensation of the steering system is performed by the addition of the compensation signal CM so as to improve a convergence, an inertia characteristic and so on. The compensation signal generating section 34 adds a self-aligning torque (SAT) 34C and an inertia 34B at an adding section 34D, further adds the result of addition performed at the adding section 34D with a convergence 34A at an adding section 34E, and then outputs the result of addition performed at the adding section 34E as the compensation signal CM.

Research and development of an automatic driving technique of a vehicle has been recently advanced, and proposals where an electric power steering apparatus (EPS) is applied to an automatic steering included in the technique, have been made. In the case of achieving the automatic steering by the EPS, the EPS has a mechanism for the assist control performed by a conventional EPS and a mechanism for the steering angle control of controlling a steering system so that the vehicle drives in a desired direction independently, and is generally configured so as to make outputs of these mechanisms possible to adjust. In the steering angle control, a position and velocity control having a superior performance of responsiveness to a steering angle command being a control target of a steering angle and a disturbance suppression characteristic to a road surface reaction force and so on, is used, for example, a proportional (P) control is adopted in the position control, and a proportional integral (PI) control is adopted in the velocity control.

In the case of performing the assist control and the steering angle control independently and performing the whole control by switching command values being outputs of both controls, switching them by a switch or the like suddenly may cause the uncomfortable feeling to the driver because the command value is suddenly changed and a handle behavior becomes unnatural. In order to deal with this problem, in the case of switching between a torque control method (corresponding to the assist control) and a rotational angle control method (corresponding to the steering angle control), an apparatus disclosed in Japanese Unexamined Patent Publication No.2004-17881 A (Patent Document 1) sets a value obtained by multiplying respective command values of both methods with coefficients (an automatic coefficient and a manual coefficient) and adding the multiplied results on a final command value, gradually changes these coefficients, and suppresses an abrupt change of the command value. The apparatus uses a P-control in the position control of the rotational angle control method, and uses a PI-control in the velocity control.

In the publication of Japanese Patent No. 3917008 B2 (Patent Document 2), an automatic steering control apparatus is proposed that automatically performs a handle operation depending on a set steering angle and aims at a parking assist in particular. This apparatus can switch between a torque control mode (corresponding to the assist control) and a parking assist mode (corresponding to the steering angle control), and performs the control by using pre-stored parking data in the parking assist mode. Further, the apparatus performs a P-control in the position control of the parking assist mode, and performs a PI-control in the velocity control.

The publication of Japanese Patent No.3912279 B2 (Patent Document 3) does not directly apply the EPS, however, when an apparatus disclosed in Patent Document 3 starts the steering angle control by switching a mode to an automatic steering mode, the apparatus reduces the uncomfortable feeling to a driver caused by an abrupt change of a handle at the start by gradually increasing a steering velocity (a steering angular velocity).

### The List of Prior Art Documents

### Patent Documents

Patent Document 1: Japanese Unexamined Patent Publication No.2004-17881 A
Patent Document 2: Japanese Patent No.3917008 B2
Patent Document 3: Japanese Patent No.3912279 B2

### Summary of the Invention

### Problems to be Solved by the Invention

However, in Patent Document 1, since a command value for the steering angle control (a steering angle control command value) is limited by the coefficient and is outputted to the final command value while the method is switched, the final command value decreases by the limited amount. Since an actual velocity of the motor becomes slow because of this limitation compared with a command value for a steering angular velocity (a steering angular velocity command value) calculated by using the steering angle control command value, a deviation occurs between the steering angular velocity command value and the actual velocity, an integral value of an integral (I) control in the velocity control accumulates, and a larger steering angle control command value is outputted from the velocity control. As a result, since the limitation by the coefficient is relaxed in the state where the coefficient by which a command value for the assist control (an assist control command value) is multiplied gradually increases, the steering angle control command value becomes an excessive value as the coefficient increases, the handle reacts to the steering angular velocity command value excessively, and it may cause the uncomfortable feeling such as catching feeling and unpleasantness to the driver.

Further, the apparatus disclosed in Patent Document 1 uses the P-control in the position control and the PI-control in the velocity control. When the manual input of the driver intervenes in the steering angle control, the steering angle control operates so as to follow the steering angle control command value, and it is difficult to steer by hands until the switching from the steering angle control to the assist control is performed. Furthermore, a time delay occurs by detecting the manual input and switching, and the operation for the steering intervention by the driver may not be performed sufficiently.

The apparatus disclosed in Patent Document 2 also performs the steering angle control by using the P-control in the position control and the PI-control in the velocity control. In the case of performing the steering angle control in the vehicle, a disturbance and a load state are significantly changed by the vehicle speed, friction, change of a road surface reaction force and so on, so that the apparatus must have a control configuration being resistant to them. However, in the control configuration of the apparatus described in Patent Document 2 alone, for example, in the case that the road surface reaction force changes, or in the case that a target steering angle changes rapidly, a vibration occurs by a natural vibration caused by a mass damper of the steering wheel and a spring of the torsion bar, and the driver may feel it as the uncomfortable feeling or the unpleasantness.

The apparatus disclosed in Patent Document 3 gradually increases the steering angular velocity at the start of the steering angle control, and since the steering angular velocity continues increasing until an upper limit after beginning to increase, an integral value of the I-control accumulates excessively. As a result, the steering angle control command value becomes an excessive value, the handle reacts to the steering angular velocity command value excessively, and it may cause the uncomfortable feeling to the driver.

The present invention has been developed in view of the above-described circumstances, and an object of the present invention is to provide an electric power steering apparatus that achieves a manual steering even if a steering intervention is performed by a driver during an automatic steering, ensures more safety when a driver steers urgently, and enables both the assist control and the steering angle control. The uncomfortable feeling such as catching feeling and the unpleasantness to the driver are reduced when switching from the automatic steering to the manual steering.

### Means for Solving the Problems

The present invention relates to an electric power steering apparatus that drives a motor based on a current command value and performs an assist control and a steering angle control to a steering system by driving and controlling the motor, the above-described object of the present invention is achieved by that comprising: a steering angle control section that calculates a steering angle control current command value for the steering angle control based on at least a steering angle command value and an actual steering angle, and a switch judging and gradual-change gain generating section that judges a steering state based on a manual input judgment and performs a switch of the steering state; wherein the steering angle control section comprises a filter section that converts a steering angular velocity command value calculated from at least the steering angle command value and the actual steering angle into an extended steering angular velocity command value by using a feed-forward filter (an FF filter), and the steering angle control section calculates the steering angle control current command value based on the extended steering angular velocity command value and an actual steering angular velocity, wherein the switch judging and gradual-change gain generating section comprises a manual input judging section that performs the manual input judgment to a steering torque by using a threshold, and wherein the electric power steering apparatus calculates the current command value using at least the steering angle control current command value.

The above-described object of the present invention is efficiently achieved by that: wherein the manual input judging section performs the manual input judgment to the steering torque, which is smoothed with a smoothing filter, by using the threshold; or wherein the manual input judging section has plural judgment results as a judgment result indicating that a manual input is performed, by using the plural thresholds to the steering torque; or wherein the manual input judging section has the plural smoothing filters that have a different characteristic, calculates plural smoothing steering torques by smoothing the steering torque using the respective smoothing filters, and performs the manual input judgment to the respective smoothing steering torques by using the threshold; or wherein the manual input judging section has plural judgment results as a judgment result of presence of manual input, by using the plural thresholds to at least one of the smoothing steering torques; or wherein the switch judging and gradual-change gain generating section comprises a steering state judging section that judges the steering state based on a switch signal, which an operation mode is switched to an assist control mode or a steering angle control mode, and a judgment result of the manual input judging section, and a gradual-change gain generating section that generates a gradual-change gain that adjusts a control amount of the assist control and a control amount of the steering angle control depending on the steering state; or wherein the steering state judging section judges that the steering state is a manual steering in a case that the switch signal is the assist control mode, or in a case that the previous steering state is an automatic steering 1 or an automatic steering 2 and the judgment result of presence of manual input 3 is judged; or wherein the steering state judging section judges that the steering state is the automatic steering 1 in a case that the previous steering state is the manual steering or the automatic steering 2, the switch signal is the steering angle control mode and the judgment result of absence of manual input, is judged; or wherein the gradual-change gain generating section sets the gradual-change gain to a first predetermined gain value against the automatic steering 1, sets the gradual-change gain to a second predetermined gain value against the manual steering, changes the gradual-change gain to the first gain value in a case that the steering state changes to the automatic steering 1, and changes the gradual-change gain to the second gain value in a case that the steering state changes to the manual steering.

The present invention relates to an electric power steering apparatus that drives a motor based on a current command value and performs an assist control and a steering angle control to a steering system by driving and controlling the motor, the above-described object of the present invention is achieved by that comprising: a steering angle control section that calculates a steering angle control current command value for the steering angle control based on at least a steering angle command value and an actual steering angle, and a switch judging and gradual-change gain generating section that judges a steering state based on a manual input judgment and performs a switch of the steering state, wherein the steering angle control section comprises a filter section that converts a steering angular velocity command value calculated from at least the steering angle command value and the actual steering angle into an extended steering angular velocity command value by using a feed-forward filter (an FF filter), and calculates the steering angle control current command value based on the extended steering angular velocity command value and an actual steering angular velocity, wherein the switch judging and gradual-change gain generating section comprises a manual input judging section having a first judging section which performs the manual input judgment by using an estimation steering angle, which is estimated based on the steering angle command value, and an error threshold to an error of the actual steering angle, and wherein the electric power steering apparatus calculates the current command value using at least the steering angle control current command value.

The above-described object of the present invention is efficiently achieved by that: wherein the first judging section has plural smoothing filters for an error, which have a different characteristic, calculates plural smoothing errors by smoothing the error using the respective smoothing filters for an error, and performs the manual input judgment to the respective smoothing errors by using the error threshold; or wherein the first judging section has plural judgment results as a judgment result of presence of manual input, by using the plural error thresholds to at least one of the smoothing errors; or wherein the manual input judging section further includes a second judging section that performs the manual input judgment to a steering torque by using a torque threshold; or wherein the second judging section has plural smoothing filters for a torque that have a different characteristic, calculates plural smoothing steering torques by smoothing the steering torque using the respective smoothing filters for a torque, and performs the manual input judgment to the respective smoothing steering torques by using the torque threshold; or wherein the second judging section has plural judgment results as a judgment result of presence of manual input, by using the plural torque thresholds to at least one of the smoothing steering torques; or wherein the switch judging and gradual-change gain generating section comprises a steering state judging section that judges the steering state based on a switch signal, which an operation mode is switched to an assist control mode or a steering angle control mode, a first judgment result of the first judging section, and a second judgment result of the second judging section, and a gradual-change gain generating section that generates a gradual-change gain that adjusts a control amount of the assist control and a control amount of the steering angle control depending on the steering state; or wherein the steering state judging section judges that the steering state is a manual steering in a case that the switch signal is the assist control mode, or in a case that the previous steering state is an automatic steering 1 or an automatic steering 2, and the first judgment result or the second judgment result of presence of manual input 3, is judged; or wherein the steering state judging section judges that the steering state is the automatic steering 1 in a case that the previous steering state is the manual steering or the automatic steering 2, the switch signal is the steering angle control mode, and the first judgment result and the second judgment result of absence of manual input, are judged; or wherein the gradual-change gain generating section sets the gradual-change gain to a first predetermined gain value against the automatic steering 1, sets the gradual-change gain to a second predetermined gain value against the manual steering, changes the gradual-change gain to the first gain value in a case that the steering state changes to the automatic steering 1, and changes the gradual-change gain to the second gain value in a case that the steering state changes to the manual steering; or wherein the gradual-change gain generating section generates a steering angle command gradual-change gain, which is multiplied by the steering angle command value, and changes the steering angle command gradual-change gain to the second gain value in a case that the steering state is changed to the automatic steering 2.

### Effects of the Invention

The electric power steering apparatus of the present invention enables safety and reduction of the uncomfortable feeling even if the steering intervention is performed during the automatic steering, and can switch from the automatic steering to the manual steering, in which the uncomfortable feeling is suppressed, because it performs the switch of the steering state by utilizing the manual input judgment.

### Brief Description of the Drawings

In the accompanying drawings:
FIG.1 is a configuration diagram illustrating a general outline of an electric power steering apparatus;
FIG.2 is a block diagram showing a configuration example of a control unit (ECU) of the electric power steering apparatus;
FIG.3 is a block diagram showing a configuration example (the first embodiment) of a whole vehicle system relating to the present invention;
FIG.4 is a block diagram showing a configuration example (the first embodiment) of a switch judging and gradual-change gain generating section;
FIG.5 is a block diagram showing a configuration example (the first embodiment) of a manual input judging section;
FIGs . 6A, 6B and 6C are graphs showing an example of changing gradual-change gains corresponding to a steering state;
FIG.7 is a block diagram showing a configuration example (the first embodiment) of a steering angle control section and a switching section;
FIG.8 is a characteristic diagram showing an example of a limit value in a steering angle command value variable-limiting section;
FIG.9 is a block diagram showing a configuration example of a position control section;
FIG.10 is a block diagram showing a configuration example of a steering intervention compensating section;
FIG.11 is a characteristic diagram showing a setting example of a dead band to a steering torque in the steering intervention compensating section;
FIG.12 is a characteristic diagram showing an example of a steering intervention compensating map;
FIG.13 is a characteristic diagram showing an example of a limit value in a velocity command value variable-limiting section;
FIG.14 is a block diagram showing a configuration example (the first embodiment) of a steering angular velocity control section;
FIG.15 is a block diagram showing a configuration example of a handle damping section;
FIG.16 is a characteristic diagram showing an example of a limit value in a steering angle control current command value limiting section;
FIG.17 is a flowchart showing an operating example of an EPS-side ECU;
FIG.18 is a flowchart showing an operating example (the first embodiment) of the switch judging and gradual-change gain generating section;
FIG.19 is a flowchart showing a part of an operating example (the first embodiment) of the steering angle control section;
FIG.20 is a flowchart showing a part of the operating example (the first embodiment) of the steering angle control section;
FIG.21 is a block diagram showing an example of a steering model of a driver used in simulations;
FIG.22 is a graph showing an example of time responses of a target angle, an actual steering angle and a steering torque in a simulation with respect to steering intervention compensation;
FIG. 23 is a graph showing an example of changing the actual steering angle and the steering torque in the simulation with respect to the steering intervention compensation;
FIG.24 is a graph showing an example of time responses of a target angle, an actual steering angle and a steering torque in a simulation with respect to the dead band;
FIG.25 is a graph showing a result of time response of the steering torque in a simulation with respect to the dead band;
FIG.26 is a graph showing a result of a simulation with respect to followability to a steering angle command value;
FIGs.27A and 27B are characteristic diagrams showing an example of a frequency characteristic from a steering angular velocity command value to an actual steering angular velocity in a simulation with respect to a feed-forward (FF) filter;
FIGs.28A and 28B are graphs showing a result of the simulation with respect to the FF filter;
FIG.29 is a graph showing a result of the simulation with respect to handle vibration;
FIG.30 is a graph showing an example (the first embodiment) of changing a target steering angular velocity, gradual-change gains and a limit value in the case of transferring a steering state;
FIG.31 is a block diagram showing a configuration example (the second embodiment) of the manual input judging section;
FIG.32 is a flowchart showing an operating example (the second embodiment) of the switch judging and gradual-change gain generating section;
FIG.33 is a block diagram showing a configuration example (the third embodiment) of a whole vehicle system relating to the present invention;
FIG.34 is a block diagram showing a configuration example (the third embodiment) of the switch judging and gradual-change gain generating section;
FIG.35 is a block diagram showing a configuration example (the third embodiment) of the manual input judging section;
FIG.36 is a flowchart showing a part of an operating example (the third embodiment) of the switch judging and gradual-change gain generating section;
FIG.37 is a flowchart showing a part of an operating example (the third embodiment) of the switch judging and gradual-change gain generating section;
FIG.38 is a block diagram showing a configuration example (the fourth embodiment) of a whole vehicle system relating to the present invention;
FIG.39 is a block diagram showing a configuration example (the fourth embodiment) of the steering angle control section and the switching section;
FIG.40 is an image diagram showing an example of changing behaviors of a manual input judging result and the steering state when the steering intervention is performed by the driver;
FIG.41 is a flowchart showing an operating example (the fourth embodiment) of a gradual-change gain generating section;
FIG.42 is a flowchart showing an operating example (the fourth embodiment) of a variable-rate limiting section;
FIG.43 is a block diagram showing a configuration example (the fifth embodiment) of the steering angular velocity control section;
FIG.44 is a block diagram showing a configuration example (the sixth embodiment) of the steering angular velocity control section; and
FIG.45 is a graph showing an example (a seventh embodiment) of changing the target steering angular velocity, the gradual-change gains and the limit value in the case of transferring the steering state.

### Mode for Carrying Out the Invention

An electric power steering apparatus (EPS) according to the present invention performs an assist control being a function of a conventional EPS and a steering angle control necessary to an automatic steering in an automatic driving. The assist control and the steering angle control are performed at an assist control section and a steering angle control section respectively, and the EPS calculates a current command value for driving and controlling a motor by using an assist control current command value and a steering angle control current command value outputted from respective sections. Both of the steering angle control and the assist control are performed in the automatic steering (an automatic steering state), and the assist control is performed in a manual steering (a manual steering state) when a driver takes part in a steering. A switch between the automatic steering and the manual steering is generally performed by a switch signal from a control unit (ECU) and the like equipped with a vehicle. Even when a steering intervention is performed by the driver during the automatic steering, in the present invention, a manual input judgment is performed based on a steering torque and/or an error between an estimated steering angle and an actual steering angle, the switch judgment between the automatic steering and the manual steering is performed by using the above manual input judgment result, and the switching operation is performed, so that the steering state is changed to the manual steering quickly and smoothly. The switch judgment is performed in a switch judging and gradual-change gain generating section. In order to reduce uncomfortable feeling caused by a steering intervention during the automatic steering, the EPS can perform a steering intervention compensation corresponding to a steering torque. Concretely, the EPS compensates a steering angular velocity command value by means of a compensation value (a compensatory steering angular velocity command value) obtained at a steering intervention compensating section. A process using a feed-forward (FF) filter is performed to the compensated steering angular velocity command value, and the steering angular velocity control is performed by using a processed steering angular velocity command value (an extended steering angular velocity command value). Thereby, responsiveness in the steering angle control and the steering intervention can be improved.

Hereinafter, embodiments of the present invention will be described with reference to the accompanying drawings.

First, a whole vehicle system including the electric power steering apparatus according to the present invention will be described.

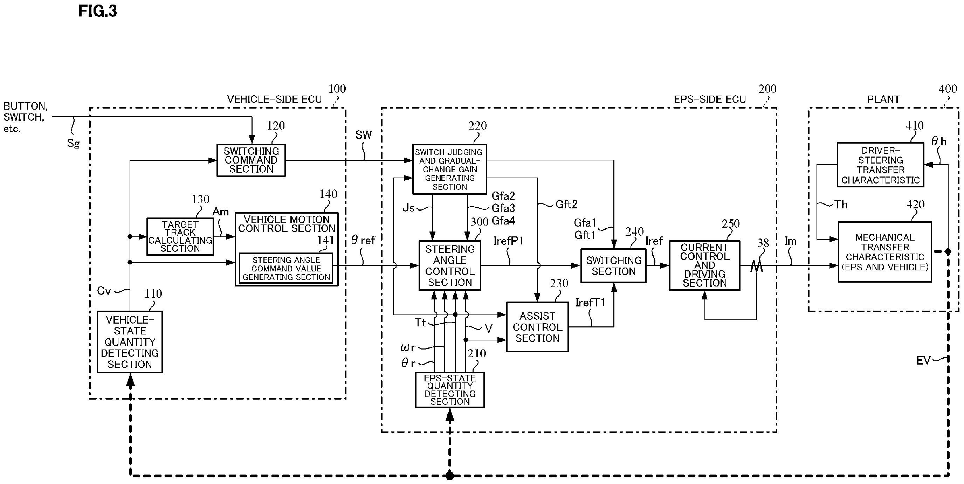

FIG.3 shows a configuration example (the first embodiment) of the whole vehicle system relating to the present invention, which comprises an ECU equipped for a vehicle (hereinafter referred to a "vehicle-side ECU") 100, an ECU equipped for the EPS (hereinafter referred to an "EPS-side ECU") 200, and a plant 400.

The vehicle-side ECU 100 comprises a vehicle-state quantity detecting section 110, a switch command section 120, a target track calculating section 130 and a vehicle motion control section 140.

The vehicle-state quantity detecting section 110 comprises an on-vehicle camera, a distance sensor, an angular velocity sensor, an acceleration sensor and so on, and outputs data detected by them as a vehicle-state quantity Cv to the switch command section 120, the target track calculating section 130 and the vehicle motion control section 140.

The switch command section 120 inputs a signal Sg for switching an operation mode from a button, a switch or the like provided for a dashboard or the like with the vehicle-state quantity Cv, and outputs a switch signal SW to the EPS-side ECU 200. The operation mode has an "assist control mode" and a "steering angle control mode", the "assist control mode" is a mode corresponding to the manual steering, and the "steering angle control mode" is a mode corresponding to the automatic steering. The switch command section 120 determines the operation mode considering respective data included in the vehicle-state quantity Cv based on the signal Sg which shows an intention of the driver, and outputs the determined operation mode as the switch signal SW.

The target track calculating section 130 calculates a target track Am with an existing method based on the vehicle-state quantity Cv, and outputs it to the vehicle motion control section 140.

The vehicle motion control section 140 includes a steering angle command value generating section 141. The steering angle command value generating section 141 generates a steering angle command value θref being a control target value of the steering angle based on the target track Am and the vehicle-state quantity Cv, and outputs it to the EPS-side ECU 200.

The EPS-side ECU 200 comprises an EPS-state quantity detecting section 210, a switch judging and gradual-change gain generating section 220, a steering angle control section 300, an assist control section 230, a switching section 240, a current control and driving section 250 and a motor current detector 38.

The EPS-state quantity detecting section 210 inputs signals from an angle sensor, a torque sensor and a speed sensor, and detects an EPS-state quantity. Specifically, the angle sensor detects a handle angle (an angle at an upper side of a torsion bar) θh as an actual steering angle θr, the torque sensor detects a steering torque Tt, and the speed sensor detects a vehicle speed V. Further, the EPS-state quantity detecting section 210 calculates an actual steering angular velocity ωr by performing a differential calculation to the actual steering angle θr. The actual steering angle θr and the actual steering angular velocity ωr are inputted into the steering angle control section 300, the steering torque Tt is inputted into the switch judging and gradual-change gain generating section 220, the steering angle control section 300 and the assist control section 230, and the vehicle speed V is inputted into the steering angle control section 300 and the assist control section 230.

As well, it is possible to use a column angle (an angle at a lower side of the torsion bar) as the actual steering angle θr, and also to use a rotational angle of the motor as the actual steering angle θr by providing a motor angle sensor (a rotational angle sensor). Furthermore, the actual steering angle θr and the vehicle speed V may be detected at the vehicle-side ECU 100, and may be sent to the EPS-side ECU 200. The actual steering angular velocity ωr may be calculated by performing the difference calculation with respect to the rotational angle detected by the motor angle sensor and using a gear ratio, or may be calculated by performing the difference calculation with respect to the actual steering angle θr. It is possible to insert a low pass filter (LPF) at the final stage of the EPS-state quantity detecting section 210 to reduce a high frequency noise, and in this case, it is possible to calculate the actual steering angular velocity ωr by a high pass filter (HPF) and a gain.

The switch judging and gradual-change gain generating section 220 performs a switch judging between the automatic steering and the manual steering based on the switch signal SW from the vehicle-side ECU 100 and the steering torque Tt, and determines gradual-change gains based on the judgment result. The switch judging and gradual-change gain generating section 220 obtains a steering angle control output gradual-change gain Gfa1, a velocity control gradual-change gain Gfa2, a velocity command gradual-change gain Gfa3, a steering angle command gradual-change gain Gfa4, an assist control output gradual-change gain Gft1 and an assist map gradual-change gain Gft2, the gradual-change gains Gfa1 and Gft1 are inputted into the switching section 240, the gradual-change gains Gfa2, Gfa3 and Gfa4 are inputted into the steering angle control section 300, and the gradual-change gain Gft2 is inputted into the assist control section 230. The switch judgment result is inputted into the steering angle control section 300 as a steering state judgment signal Js. The detail of the switch judging and gradual-change gain generating section 220 will be described later.

The steering angle control section 300 calculates a steering angle control current command value IrefPl by using the steering angle command value θref from the vehicle-side ECU 100, the actual steering angle θr, the actual steering angular velocity ωr, the steering torque Tt, the vehicle speed V and the gradual-change gains Gfa2, Gfa3 and Gfa4, and the steering state judgment signal Js in order to perform the steering angle control. The steering angle control current command value IrefPl is inputted into the switching section 240.

As well, it is possible to calculate the actual steering angular velocity ωr not at the EPS-state quantity detecting section 210 but at steering angle control section 300. The detail of the steering angle control section 300 will be described later.

The assist control section 230 comprises, for example, the current command value calculating section 31, the current limiting section 33, the compensation signal generating section 34 and the adding section 32A in a configuration example shown in FIG.2 in order to perform the assist control, and calculates an assist control current command value IrefT1 equivalent to the current command value Irefm shown in FIG.2 based on the steering torque Tt and the vehicle speed V and by using an assist map. However, the assist control section 230 is different from the configuration example shown in FIG.2, inputs the assist map gradual-change gain Gft2 outputted from the switch judging and gradual-change gain generating section 220, multiplies an output (an assist map output current) from the current command value calculating section 31 with the gradual-change gain Gft2, and inputs the multiplied result into the adding section 32A. The assist map used at the current command value calculating section 31 is a map that defines a characteristic of a current command value for the steering torque Tt, is vehicle speed sensitive, and has a characteristic that the current command value decreases as the vehicle speed V increases. Besides, the current limiting section 33 and/or the compensation signal generating section 34 may be removed.

The switching section 240 calculates a current command value Iref by using the steering angle control current command value IrefPl, the assist control current command value IrefT1 and the gradual-change gains Gfa1 and Gft1. The detail of the switching section 240 will be described later.

The current control and driving section 250 includes, for example, the subtracting section 32B, the PI-control section 35, the PWM-control section 36 and the inverter 37 in the configuration example shown in FIG.2, and drives and controls the motor by using the current command value Iref and the motor current Im detected by the motor current detector 38 and by the same operations as the configuration example shown in FIG.2.

The plant 400 is a physical model of a control target that simulates a characteristic of the driver in the handle steering and a mechanical characteristic of the EPS and the vehicle, and comprises a driver-steering transfer characteristic 410 and a mechanical transfer characteristic 420. A mechanical system operates based on a handle manual input torque Th caused by the steering of the driver and the motor current Im from the EPS-side ECU 200, and this causes a state information EV with respect to the vehicle and the EPS, so that the mechanical transfer characteristic 420 outputs the state information EV. The vehicle-state quantity detecting section 110 in the vehicle-side ECU 100 and the EPS-state quantity detecting section 210 in the EPS-side ECU 200 detect the vehicle-state quantity Cv and the EPS-state quantity respectively from the state information EV. Since the handle manual input torque Th caused by the steering of the driver occurs depending on the handle angle θh included in the state information EV, the driver-steering transfer characteristic 410 outputs the handle manual input torque Th.

Next, the switch judging and gradual-change gain generating section 220, the steering angle control section 300 and the switching section 240 in the EPS-side ECU 200 will be described in detail.

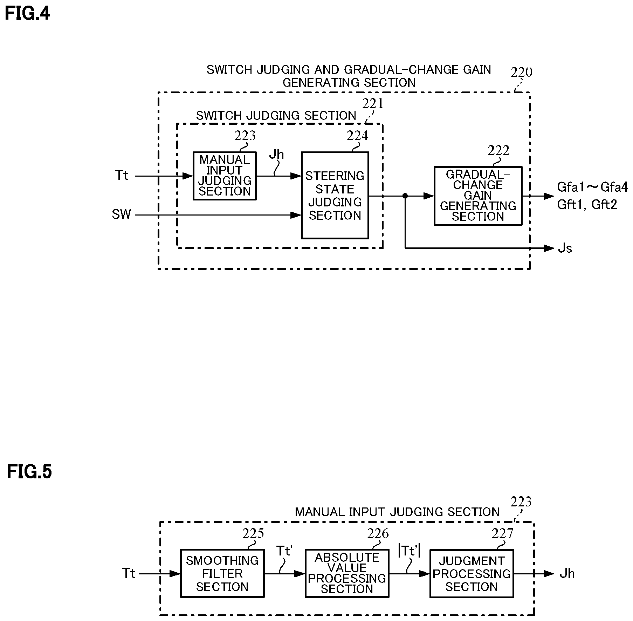

FIG.4 shows a configuration example of the switch judging and gradual-change gain generating section 220, the switch judging and gradual-change gain generating section 220 comprises a switch judging section 221 and a gradual-change gain generating section 222, and the switch judging section 221 comprises a manual input judging section 223 and a steering state judging section 224.

The manual input judging section 223 performs the manual input judgment by using the steering torque Tt. A configuration example of the manual input judging section 223 is shown in FIG.5. The manual input judging section 223 comprises a smoothing filter section 225, an absolute value processing section 226 and a judgment processing section 227. The smoothing filter section 225 has a smoothing filter, smooths the steering torque Tt with the smoothing filter, and outputs a steering torque Tt' obtained after the smoothing. The steering torque Tt' is inputted into the absolute value processing section 226, and the absolute value processing section 226 outputs an absolute value (an absolute value data) |Tt'| of the steering torque Tt'. The absolute value |Tt'| is inputted into the judgment processing section 227. The judgment processing section 227 judges three kinds of "the manual input is performed" and one kind of "the manual input is not performed" by using plural predetermined thresholds Tth1, Tth2 and Tth3 (0 ≤ Tth1 ≤ Tth2 ≤ Tth3). Concretely, in the case that "the absolute value |Tt'| is equal to or more than the threshold Tth3", the judgment processing section 227 judges "the manual input 3 is performed". In the case that "the absolute value |Tt'| is equal to or more than the threshold Tth2 and is less than the threshold Tth3", the judgment processing section 227 judges "the manual input 2 is performed". In the case that "the absolute value |Tt'| is equal to or more than the threshold Tth1 and is less than the threshold Tth2", the judgment processing section 227 judges "the manual input 1 is performed". In the case that "the absolute value |Tt'| is less than the threshold Tth1", the judgment processing section 227 judges "the manual input is not performed" . The judgment result is outputted as a manual input judgment signal Jh.

As well, the judgment processing section 227 performs the judgment by using the three thresholds. The number of the thresholds is not limited to three, and the judgment may be performed by using the thresholds whose number is not three. Thereby, flexible judgment can be performed.

The steering state judging section 224 judges a steering state with the switch signal SW from the vehicle-side ECU 100 and the manual input judgment signal Jh. "Automatic steering 1", "automatic steering 2" and "manual steering" are existed in the steering state. The "automatic steering 1" is corresponding to the normal automatic steering state. The latest steering state is judged by the following conditions based on the switch signal SW, the manual input judgment signal Jh and the steering state when inputting the various data (accurately, this state is the steering state in the preceding sample (before one sampling). Hereinafter, this state is referred to as "a previous steering state").

### [Condition 1]

In the case that the previous steering state is "automatic steering 1" or "automatic steering 2", and the switch signal SW is "assist control mode" or the manual input judgment signal Jh is "presence of manual input 3", the steering state is judged as "manual steering".

### [Condition 2]

In the case that the previous steering state is "automatic steering 1", the switch signal SW is "steering angle control mode", and the manual input judgment signal Jh is "presence of manual input 2", the steering state is judged as "automatic steering 2".

### [Condition 3]

In the case that the previous steering state is "automatic steering 2", the switch signal SW is "steering angle control mode", and the manual input judgment signal Jh is "presence of manual input 1" or "presence of manual input 2", the steering state is not changed and is judged as "automatic steering 2".

### [Condition 4]

In the case that the previous steering state is "automatic steering 2", the switch signal SW is "steering angle control mode", and the manual input judgment signal Jh is "absence of manual input", the steering state is judged as "automatic steering 1".

### [Condition 5]

In the case that the previous steering state is "manual steering", the switch signal SW is "steering angle control mode", and the manual input judgment signal Jh is "absence of manual input", the steering state is judged as "automatic steering 1".

In detail, the above conditions 1 to 5 are represented by the following Table 1. In the table 1, "-" means any value (that is, this value is not involved in the judgment) . The word "continue" means that the steering state is not changed. The conditions in the respective columns are coupled with the "AND" condition, and the steering state is judged.

**[Table 1]**

| previous steering state | switch signal SW | manual input judgment signal Jh | judgment result |
|---|---|---|---|
| automatic steering 1 | assist control mode | - | manual steering |
| | steering angle control mode | presence of manual input 3 | manual steering |
| | | presence of manual input 2 | automatic steering 2 |
| | | presence of manual input 1 | (continue) |
| | | absence of manual input | (continue) |
| automatic steering 2 | assist control mode | - | manual steering |
| | steering angle control mode | presence of manual input 3 | manual steering |
| | | presence of manual input 2 | (continue) |
| | | presence of manual input 1 | (continue) |
| | | absence of manual input | automatic steering 1 |
| manual steering | assist control mode | - | (continue) |
| | steering angle control mode | absence of manual input | automatic steering 1 |
| | | presence of manual input 1, 2 or 3 | (continue) |

The steering state is judged in accordance with the above Table 1, and the judgment result is outputted to the gradual-change gain generating section 222 and the steering angle control section 300 as the steering state judgment signal Js. In the steering angle control section 300, the steering state judgment signal Js is used in setting a limit value in a following variable-rate limiting section 320. The steering state may be judged without using the switch signal SW.

The gradual-change gain generating section 222 determines the gradual-change gains basedon the steering state judgment signal Js. The gradual-change gains take various values depending on the steering state, and the gradual-change gain generating section 222 judges the steering state with the steering state judgment signal Js. The "automatic steering 1" is judged as the automatic steering state, and in the case of "automatic steering 2", the gradual-change gains take the previous values.

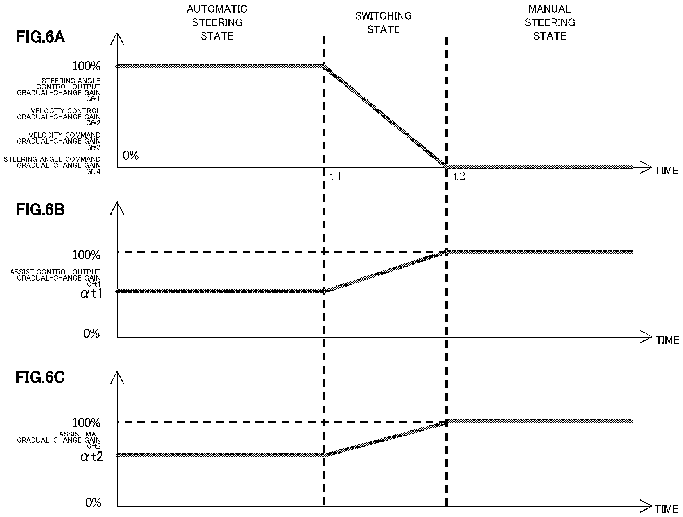

The gradual-change gains Gfa1, Gfa2, Gfa3 and Gfa4 are 100% in the automatic steering state, are 0% in the manual steering state, and are gradually changed in the case of shifting from the automatic steering state to the manual steering and in the case of shifting from the manual steering to the automatic steering state. For example, in the case of shifting from the automatic steering state to the manual steering, the gradual-change gains Gfa1 to Gfa4 are changed as shown in FIG.6A. That is, the gradual-change gains successively decrease from a time point t1 when the steering state judgment signal Js is changed from the "automatic steering 1" to the "manual steering", and become 0% at a time point t2. On the contrary, in the case of shifting from the manual steering to the automatic steering state, the gradual-change gains successively increase from the time point when the steering state judgment signal Js is changed to the "automatic steering 1". In the case that the steering state judgment signal Js is changed to "manual steering" during the decrease or the increase in the gradual-change gains (hereinafter this state of the decrease or the increase is referred to a "switching state"), the gradual-change gains turn to decrease. In the case that the steering state judgment signal Js is changed to "automatic steering 1" during the switching state, the gradual-change gains turn to increase. In the case that the steering state judgment signal Js is changed to "automatic steering 2" during the switching state, the gradual-change gains do not change.

As well, the gradual-change gains are changed linearly in the switching state in FIG.6A, however, in order to make the switching operation smooth, they may be changed like an S-shaped bend, and it is possible to use the gradual-change gains changed linearly through such an LPF as a primary LPF whose cutoff frequency is 2 [Hz] . Further, the gradual-change gains Gfa1 to Gfa4 do not need to similarly change in conjunction, and may change independently.

The assist control output gradual-change gain Gft1 is αt1 [%] (0 ≤ αt1 ≤ 100) in the automatic steering state, is 100% in the manual steering state, and is gradually changed in the switching state as with the gradual-change gains Gfa1 to Gfa4, as shown in FIG.6B.

The assist map gradual-change gain Gft2 is αt2 [%] (0 ≤ αt2 ≤ 100) in the automatic steering state, is 100% in the manual steering state, and is gradually changed in the switching state as with the gradual-change gains Gfa1 to Gfa4, as shown in FIG.6C.

The judgement result of the manual input judgement is "the manual input 1 is performed" and the judgement of the steering state and further the determination of the gradual-change gains are performed based on the above judgement result. Thereby, in the case that the state is changed from "the manual input 2 is performed" to "the manual input is not performed", an occurrence of a chattering can be suppressed.

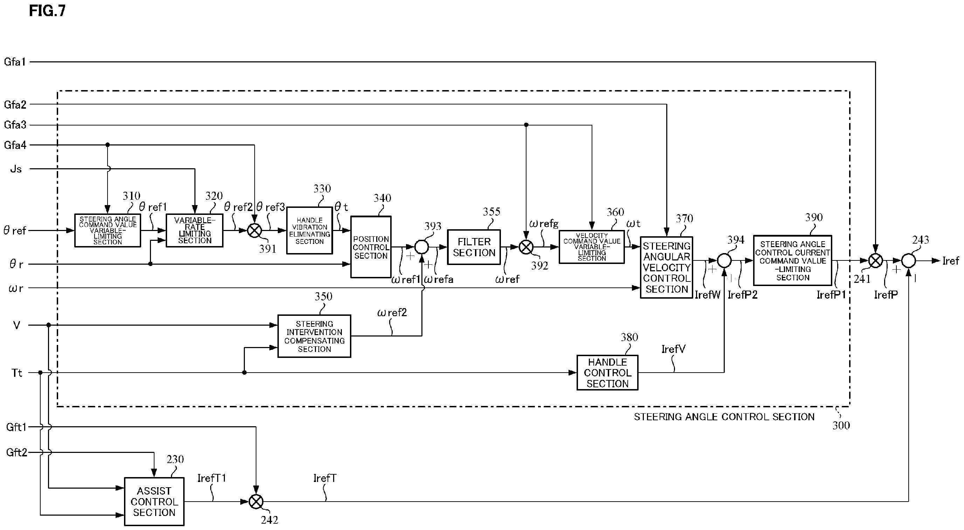

A configuration example of the steering angle control section 300 and the switching section 240 is shown in FIG.7. The steering angle control section 300 comprises a steering angle command value variable-limiting section 310, a variable-rate limiting section 320, a handle vibration eliminating section 330, a position control section 340, a steering intervention compensating section 350, a velocity command value variable-limiting section 360, a steering angular velocity control section 370, a handle damping section 380, a steering angle control current command value limiting section 390, multiplying sections 391 and 392, and adding sections 393 and 394, and the switching section 240 includes multiplying sections 241 and 242, and an adding section 243.

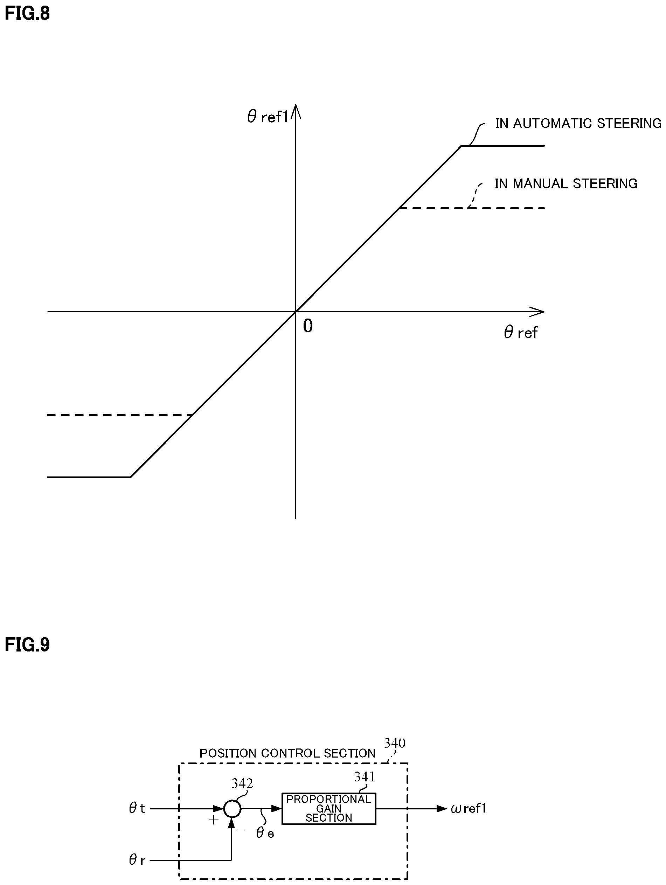

The steering angle command value variable-limiting section 310 of the steering angle control section 300 limits the steering angle command value θref which is received from the vehicle-side ECU 100 and is used for the automatic steering or the like by setting limit values (an upper limit value and a lower limit value) in order to prevent an abnormal value and an excessive value caused by a communication error or the like from being inputted into the steering control, and outputs the limited value as a steering angle command value θref1. The steering angle command value variable-limiting section 310 sets the limit values depending on the steering angle command gradual-change gain Gfa4 so as to set appropriate limit values in the automatic steering state and the manual steering state. For example, as shown in FIG.8, the steering angle command value variable-limiting section 310 judges the case where the steering angle command gradual-change gain Gfa4 is 100% to be the automatic steering state, and limits the steering angle command value θref with the limit value shown by the solid line. The steering angle command value variable-limiting section 310 judges the case where the steering angle command gradual-change gain Gfa4 is 0% to be the manual steering state, and limits the steering angle command value θref with the limit value whose absolute value is smaller than in the automatic steering state as shown by the broken line. The steering angle command value variable-limiting section 310 judges the case where the steering angle command gradual-change gain Gfa4 is between 0% and 100% to be the switching state, and limits the steering angle command value θref with a value between the solid line and the broken line. In the switching state, it is possible to limit the steering angle command value θref with the limit value of the automatic steering state shown by the solid line or the limit value of the manual steering state shown by the broken line. Besides, a magnitude (an absolute value) of the upper limit value and a magnitude of the lower limit value may be different.

In order to avoid sharply changing a steering angle control current command value being an output of the steering angle control due to a sudden change of the steering angle command value θref, the variable-rate limiting section 320 limits a change amount of the steering angle command value θref1 by setting a limit value, and outputs a steering angle command value θref2. For example, a difference between the previous and the present steering angle command values θref1 is defined as the change amount. In the case that the absolute value of the change amount is larger than a predetermined value (a limit value), the variable-rate limiting section 320 performs an addition or a subtraction to the steering angle command value θref1 so that the absolute value of the change amount becomes the limit value, and outputs the result as the steering angle command value θref2 without changing it. In the case that the absolute value of the change amount is smaller than or equal to the limit value, the variable-rate limiting section 320 outputs the steering angle command value θref1 as the steering angle command value θref2 without changing it. As with the steering angle command value variable-limiting section 310, an appropriate limit value is set in the automatic steering state and the manual steering state. Since it is possible to change the limit value not synchronized with the gradual-change gains, the limit value is set depending on the steering state judgment signal Js outputted from the switch judging and gradual-change gain generating section 220. In the case that the steering state judgment signal Js is the "automatic steering 1", the limit value is set to a predetermined value, and in the case that the steering state judgment signal Js is the "automatic steering 2" or the "manual steering", the limit value is set to zero, so that the steering angle command value θref2 is not changed and becomes constant.

As well, it is possible to limit the change amount by setting an upper limit value and a lower limit value instead of setting the limit value for the absolute value of the change amount.

At the multiplying section 391, the steering angle command value θref2 is multiplied with the steering angle command gradual-change gain Gfa4, and the multiplied result is outputted as a steering angle command value θref3. This makes a target steering angle θt which is outputted from the handle vibration eliminating section 330 as described below in the switching state from the automatic steering state to the manual steering state, gradually approximate zero, and can make the steering angle control operate to a neutral state.

The handle vibration eliminating section 330 reduces a vibration frequency component included in the steering angle command value θref3. In the automatic steering, when the steering command is changed, a frequency component (before and after about 10 [Hz]) exciting a vibration caused by springiness of the torsion bar and an inertia moment of the steering wheel, occurs in the steering angle command value θref3. The handle vibration eliminating section 330 reduces the handle vibration frequency component included this steering angle command value θref3 with a filter processing using an LPF, a notch filter and so on or a phase delay compensation, and outputs the target steering angle θt. As a filter, any filter may be used if it lowers a gain in a band of the handle vibration frequency and is possible to provide for the ECU. Providing the multiplying section 391 multiplying the steering angle command gradual-change gain Gfa4 in front of the handle vibration eliminating section 330, enables reduction of the handle vibration frequency component caused by multiplying the steering angle command gradual-change gain Gfa4. The target steering angle θt is outputted to the position control section 340.

As well, it is possible to omit the handle vibration eliminating section 330 in such a case that the handle vibration frequency component is minute.

The position control section 340 calculates a steering angular velocity command value ωref1 for making the actual steering angle θr approximate the target steering angle θt based on a deviation between the target steering angle θt and the actual steering angle θr with a proportional (P) control.

A configuration example of the position control section 340 is shown in FIG. 9. The position control section 340 comprises a proportional gain section 341 and a subtracting section 342. A deviation θe (=θt-θr) between the target steering angle θt and the actual steering angle θr is obtained at the subtracting section 342, and the deviation θe is inputted into the proportional gain section 341. The proportional gain section 341 multiplies the deviation θe with a proportional gain Kpp, and calculates the steering angular velocity command value ωref1.

The steering intervention compensating section 350 calculates a steering angular velocity command value (a compensatory steering angular velocity command value) ωref2 for compensating the steering intervention corresponding to the steering torque Tt. A value obtained by adding the steering angular velocity command value ωref2 and the steering angular velocity command value ωref1 from the position control section 340 becomes a steering angular velocity command value ωref. The function of the steering intervention compensating section 350 enables the generation of the steering angular velocity command value to mitigate an occurrence of the steering torque, and can achieve the steering intervention during the automatic steering. The steering intervention compensating section 350 can achieve the appropriate feeling by compensating to the steering torque Tt by a steering intervention compensating map with the vehicle speed sensitive, and phase-compensating to the steering torque Tt.

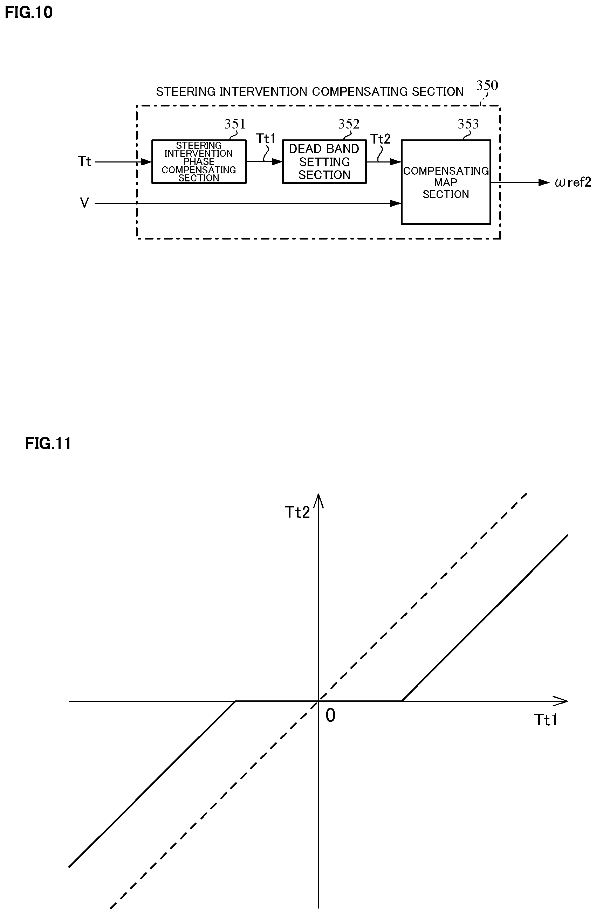

A configuration example of the steering intervention compensating section 350 is shown in FIG.10. The steering intervention compensating section 350 comprises a steering intervention phase compensating section 351, a dead band setting section 352 and a compensating map section 353.

The steering intervention phase compensating section 351 sets a phase lead compensation as the phase compensation, and converts the steering torque Tt into the steering torque Tt1. The steering intervention phase compensating section 351 performs the phase lead compensation, for example, by a primary filter where a cutoff frequency of a numerator is 1.0 [Hz] and a cutoff frequency of a denominator is 1.3 [Hz]. This enables the improvement of feeling without resistance and catching feeling in such a case of suddenly steering. Moreover, the steering intervention phase compensating section 351 may be omitted in such a case of focusing on a cost.

The dead band setting section 352 sets the dead band to the steering torque Tt1 and outputs the operated steering torque as the steering torque Tt2. For example, the dead band shown in FIG.11 is set. That is, in the case of not setting the dead band, the steering torque Tt1 is outputted as the steering torque Tt2, as shown by the broken line. By setting the dead band in the range that the steering torque Tt1 is in the vicinity of zero, as shown by the solid line, the value of the steering torque Tt2 is zero in the above range and changes the value with the same gradient of the broken line out of the above range so that the steering torque Tt2 changes in conjunction with the steering torque Tt1. By setting such a dead band, the steering angular velocity command value ωref2 outputted from the subsequent compensating map section 353 is also zero in the above range and the steering intervention compensation is not performed. That is, when the steering intervention by the driver is occurred, the steering torque easily increases up to the threshold of the dead band. As a result, the manual input judgment is performed at an early timing.

As well, the magnitude of the positive threshold in the dead band may not the same as that of the negative threshold in the dead band.

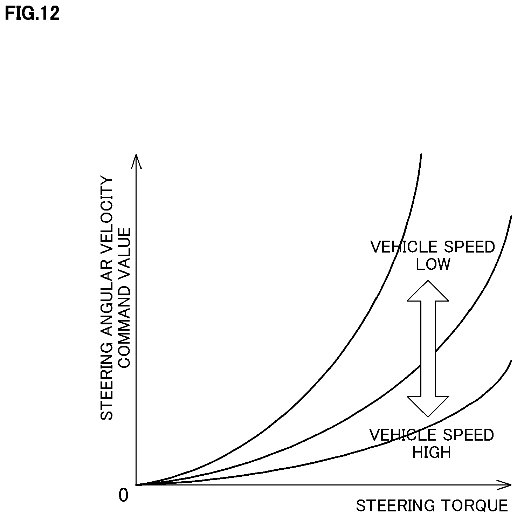

The compensating map section 353 has the steering intervention compensating map and calculates the steering angular velocity command value ωref2 by using the steering intervention compensating map. The steering intervention compensating map is a map by which the characteristic of the steering angular velocity command value to the steering torque Tt is determined, changes its value depending on the vehicle speed V, and calculates the steering angular velocity command value ωref2 by using the steering torque Tt1 and the vehicle speed V. The steering intervention compensating map is adjusted by tuning. For example, as shown in FIG.12, the steering angular velocity command value increases as the steering torque increases, and decreases as the vehicle speed increases. This enables a heavy feeling at a higher vehicle speed. The assist map used at the assist control section 230 also has a characteristic that the assist control current command value decreases as the vehicle speed increases. In the case that the steering intervention is performed by the driver at a high speed running, increases in the steering angular velocity command value and the assist control current command value are suppressed, the steering does not become sudden, and the safe steering is enabled.

As well, the steering intervention phase compensating section 351 may be disposed at the subsequent stage of the compensation map section 352 or the compensating map 353. It is necessary that the dead band setting section 352 is disposed at the preceding stage of the compensating map section 353. Even if the dead band setting section 352 is removed and the map having the dead band is used as the steering intervention compensating map (the map that the output value within the setting range is zero to the input torque), the same effect can be obtained. Assuming that the straight line passing the origin is used as the steering intervention compensating map, a simple method that the steering torque is multiplied with the predetermined gain may be used instead of the steering intervention compensating map.

The steering angular velocity command value ωref1 outputted from the position control section 340 and the steering angular velocity command value ωref2 outputted from the steering intervention compensating section 350 are added at the adding section 393, and the added result is outputted as the steering angular velocity command value ωrefa.

The filter section 355 has an FF filter, and converts the steering angular velocity command value ωrefa into the steering angular velocity command value (the extended steering angular velocity command value) ωref with the FF filter. By using the FF filter, it is possible to extend a band where the actual steering angular velocity ωr is controlled with respect to the steering angular velocity command value ωrefa to a high frequency side, and to improve the responsiveness of the velocity control operating as an inner loop of the steering angle control. If the responsiveness of the velocity control is improved, gains of the position control (the steering angle control) and the steering intervention compensation which are outside the velocity control are possible to largely adjust without overshooting, so that the responsiveness in the steering angle control and the steering intervention are possible to improve as a result. The filter section 355 uses, for example, a filter which performs phase lead compensation and where the cutoff frequency of a numerator is 3 [Hz] and the cutoff frequency of a denominator is 5 [Hz] as the FF filter.

The steering angular velocity command value ωref is multiplied with the velocity command gradual-change gain Gfa3 at the multiplying section 392, and the multiplied result is outputted as a steering angular velocity command value ωrefg. The velocity command gradual-change gain Gfa3 is used in order to achieve the smooth switching in the case of switching from the manual steering state to the automatic steering state. Moreover, the velocity command gradual-change gain Gfa3 is changed in synchronous with the steering angle control output gradual-change gain Gfa1 by which the steering angle control current command value IrefPl is multiplied (the synchronization may not be perfect).

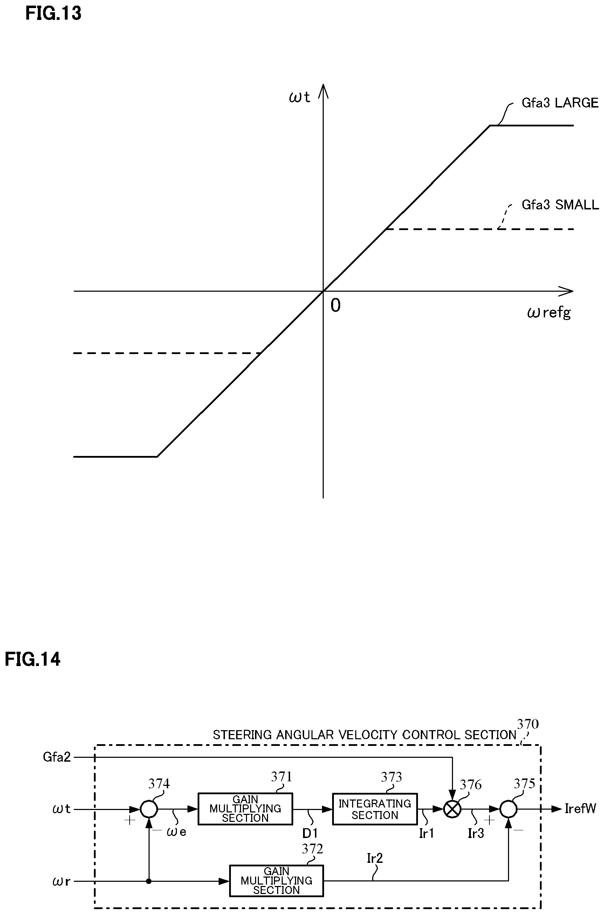

The velocity command value variable-limiting section 360 limits the steering angular velocity command value ωrefg by setting limit values (an upper limit value and a lower limit value), and outputs a target steering angular velocity ωt. The limit values are set depending on the velocity command gradual-change gain Gfa3. For example, when the velocity command gradual-change gain Gfa3 is smaller than a predetermined threshold, magnitudes (absolute values) of the limit values are small values as shown by the broken line in FIG.13, and when it is larger than or equal to the predetermined threshold, the magnitudes of the limit values are increased to the values shown by the solid line.

As well, it is possible that the predetermined threshold is set to any value of the velocity command gradual-change gain Gfa3 in the switching state, the magnitudes of the limit values are fixed at the small values shown by the broken line when the gradual-change gain Gfa3 is smaller than the predetermined threshold, and the magnitudes of the limit values are gradually increased to the values shown by the solid line. The magnitude of the upper limit value and the magnitude of the lower limit value may be different.

The steering angular velocity control section 370 inputs the target steering angular velocity ωt, the actual steering angular velocity ωr and the velocity control gradual-change gain Gfa2, and calculates a steering angle control current command value IrefW with a proportional preceding type PI (I-P) control so that the actual steering angular velocity ωr follows the target steering angular velocity ωt.

A configuration example of the steering angular velocity control section 370 is shown in FIG.14. The steering angular velocity control section 370 comprises gain multiplying sections 371 and 372, an integrating section 373, subtracting sections 374 and 375, and a multiplying section 376.

The gain multiplying section 371 multiplies a deviation ωe (=ωt-ωr) between the target steering angular velocity ωt and the actual steering angular velocity ωr, which is calculated at the subtracting section 374, with a gain Kvi, and outputs an operation amount D1. The integrating section 373 integrates the operation amount D1, and calculates a control amount Ir1. At the multiplying section 376, the control amount Ir1 is multiplied with the velocity control gradual-change gain Gfa2, and the multiplied result is outputted as a control amount Ir3. The multiplication of the velocity control gradual-change gain Gfa2 is performed in order to achieve the smooth switching between the manual steering state and the automatic steering state, and this can relax an influence of accumulating an integral value in the steering angular velocity control at the time of the switching. The gain multiplying section 372 multiplies the actual steering angular velocity ωr with a gain Kvp, and outputs a control amount Ir2. At the subtracting section 375, a deviation (Ir3-Ir2) between the control amounts Ir3 and Ir2 is calculated, and the subtracted result is outputted as the steering angle control current command value IrefW.

As well, as the integral of the integrating section 373, any method can be used if it is an integral method possible to achieve in the implementation, and the integrating section 373 can be constituted of a primary delay transfer function and a gain in the case of using pseudo-integral. Further, the velocity control gradual-change gain Gfa2 may be changed in synchronous with the steering angle control output gradual-change gain Gfa1.

Moreover, the steering angular velocity control section 370 uses the I-P control, however, a control method generally used may be used if it can make the actual steering angular velocity follow the target steering angular velocity. For example, it is possible to use a PI-control, a two-degree of freedom PI-control, a model reference control, a model matching control, a robust control, a control method that estimates a disturbance and combines a compensating means for counteracting a disturbance component with a part of it, and so on.

The handle damping section 380 damps a handle vibration based on the steering torque Tt being a torsion bar torque signal. Though the handle vibration eliminating section 330 also has an effect on the handle vibration in the automatic steering, the handle damping section 380 can further improve the effect. The handle damping section 380 damps the handle vibration with a gain and phase compensation, and outputs a steering angle control current command value IrefV operating to eliminate a twist of the torsion bar. Further, the handle damping section 380 operates to reduce a twist angle, and has also an effect of reducing catching uncomfortable feeling occurring when the manual input of the driver intervenes.

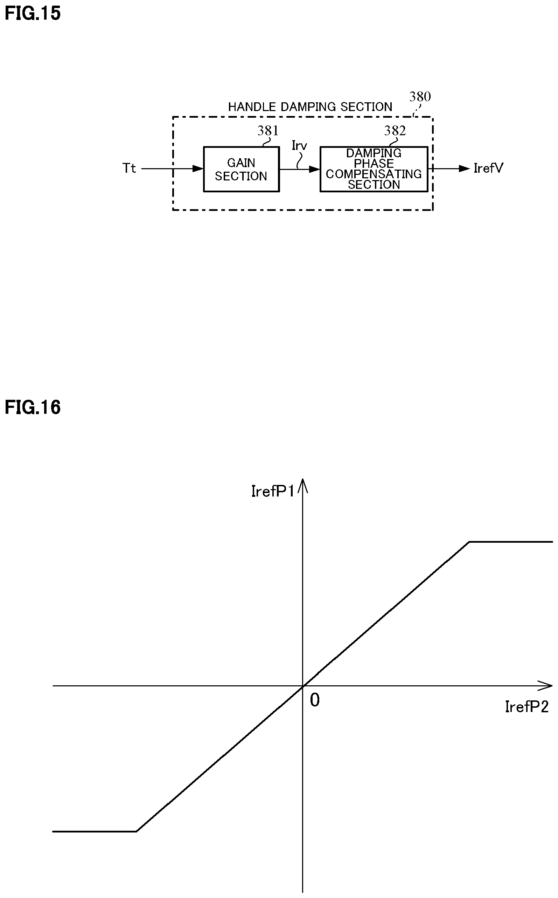

A configuration example of the handle damping section 380 is shown in FIG.15. The handle damping section 380 comprises a gain section 381 and a damping phase compensating section 382. The gain section 381 multiplies the steering torque Tt with a gain Kv, and outputs a control amount Irv. The damping phase compensating section 382 is constituted of, for example, a primary filter, and converts the control amount Irv into the steering angle control current command value IrefV. The damping phase compensating section 382 may be constituted of a phase compensation filter whose order is larger than or equal to two instead of the primary filter.

At the adding section 394, the steering angle control current command value IrefW outputted from the steering angular velocity control section 370 and the steering angle control current command value IrefV outputted from the handle damping section 380, are added, and the added result is outputted as a steering angle control current command value IrefP2.

The steering angle control current command value limiting section 390 limits the steering angle control current command value IrefP2 by setting limit values (an upper limit value and a lower limit value) in order to prevent an excessive output, and outputs the steering angle control current command value IrefPl. For example, the steering angle control current command value limiting section 390 limits the steering angle control current command value IrefP2 by setting the upper limit value and the lower limit value as shown in FIG.16. A magnitude (an absolute value) of the upper limit value and a magnitude of the lower limit value may be different.

The switching section 240 comprises the multiplying sections 241 and 242, and the adding section 243.

At the multiplying section 241 of the switching section 240, the steering angle control current command value IrefP1 outputted from the steering angle control section 300 is multiplied with the steering angle control output gradual-change gain Gfa1 outputted from the switch judging and gradual-change gain generating section 220, and the multiplied result is outputted as a steering angle control current command value IrefP. The steering angle control output gradual-change gain Gfa1 is used in order to smoothly perform the switching operation between the manual steering state and the automatic steering state and to achieve the uncomfortable feeling to the driver, the safety and so on. At the multiplying section 242, the assist control current command value IrefT1 outputted from the assist control section 230 is multiplied with the assist control output gradual change gain Gft1, and the multiplied result is outputted as an assist control current command value IrefT. The assist control output gradual-change gain Gft1 is used in order to smoothly perform the switching operation between the manual steering state and the automatic steering state and to achieve the steering intervention by the driver in the automatic steering. At the adding section 243, the steering angle control current command value IrefP and the assist control current command value IrefT are added, and the added result is outputted as the current command value Iref.

The assist map gradual-change gain Gft2 used in the above assist control section 230 is also used for the same purpose as the assist control output gradual-change gain Gft1. In the automatic steering state, setting the gradual-change gain Gft1 to the value αt1 and the gradual-change gain Gft2 to the value αt2 as shown in FIGs.6B and 6C and adjusting the value αt1 and the value αt2, enable the improvement of safety of the system and the suppression of occurrence of the vibration. Further, if it is possible to maintain the safety of the system in the automatic steering state, it is possible to set the value αt1 to 0% on and the value αt2 to 100% simply. In this case, since the value αt1 is 0%, the assist control current command value IrefT becomes a zero command, and this means to achieve the steering intervention even without the assist control.

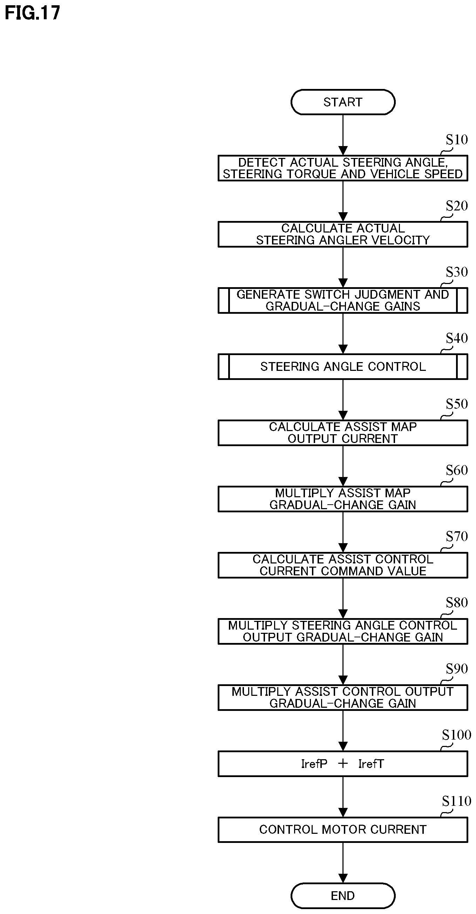

In such a configuration, an operating example of the EPS-side ECU 200 will be described with reference to flowcharts shown in FIGs.17 to 20.

When the operation is started, the EPS-state quantity detecting section 210 detects the actual steering angle θr, the steering torque Tt and the vehicle speed V (Step S10), outputs the actual steering angle θr to the steering angle control section 300, outputs the steering torque Tt to the switch judging and gradual-change gain generating section 220, the steering angle control section 300 and the assist control section 230, and outputs the vehicle speed V to the steering angle control section 300 and the assist control section 230. Furthermore, the EPS-state quantity detecting section 210 calculates the actual steering angular velocity ωr with the actual steering angle θr (Step S20), and outputs the actual steering angular velocity ωr to the steering angle control section 300.

The switch judging and gradual-change gain generating section 220 inputting the steering torque Tt judges the switching between the automatic steering and the manual steering based on the input of switch signal SW outputted from the vehicle-side ECU 100, determines the gradual-change gains based on the judgment result (Step S30), outputs the gradual-change gains Gfa2, Gfa3 and Gfa4 to the steering angle control section 300, outputs the gradual-change gain Gft2 to the assist control section 230, and outputs the gradual-change gains Gfa1 and the Gft1 to the switching section 240. The steering state judgment signal Js is outputted to the steering angle control section 300. A detailed operation of the switch judging and gradual-change gain generating section 220 will be described later.

The steering angle control section 300 inputs the steering angle command value θref outputted from the vehicle-side ECU 100, the actual steering angle θr, the actual steering angular velocity ωr, the steering torque Tt and the vehicle speed V which are outputted from the EPS-state quantity detecting section 210, and the gradual-change gains Gfa2, Gfa3 and Gfa4 and the steering state judgment signal Js outputted from the switch judging and gradual-change gain generating section 220, calculates the steering angle control current command value IrefPl by using them (Step S40), and outputs the steering angle control current command value IrefPl to the switching section 240. A detailed operation of the steering angle control section 300 will be described later.

The assist control section 230 inputs the steering torque Tt, the vehicle speed V and the assist map gradual-change gain Gft2, and calculates the assist map output current (current value) by the same operation as the current command value calculating section 31 shown in FIG.2 (Step S50). The assist control section 230 multiplies the assist map output current with the assist map gradual-change gain Gft2 (Step S60), performs the same operations as the adding section 32A, the current limiting section 33 and the compensation signal generating section 34 which are shown in FIG.2 to the multiplied result, calculates the assist control current command value IrefT1 (Step S70), and outputs the assist control current command value IrefT1 to the switching section 240.

The switching section 240 multiplies the inputted steering angle control current command value IrefPl with the steering angle control output gradual-change gain Gfa1 at the multiplying section 241 (Step S80), and outputs the steering angle control current command value IrefP being the multiplied result to the adding section 243. Further, the switching section 240 multiplies the inputted assist control current command value IrefT1 with the assist control output gradual-change gain Gft1 at the multiplying section 242 (Step S90), and outputs the assist control current command value IrefT being the multiplied result to the adding section 243. The adding section 243 adds the steering angle control current command value IrefP and the assist control current command value IrefT (Step S100), and outputs the current command value Iref being the added result to the current control and driving section 250.

By using the current command value Iref and the motor current Im detected by the motor current detector 38, the current control and driving section 250 performs the control so that the motor current Im follows the current command value Iref by the same operations as the subtracting section 32B, the PI-control section 35, the PWM-control section 36 and the inverter 37 which are shown in FIG.2 (Step S110), and drives and controls the motor.

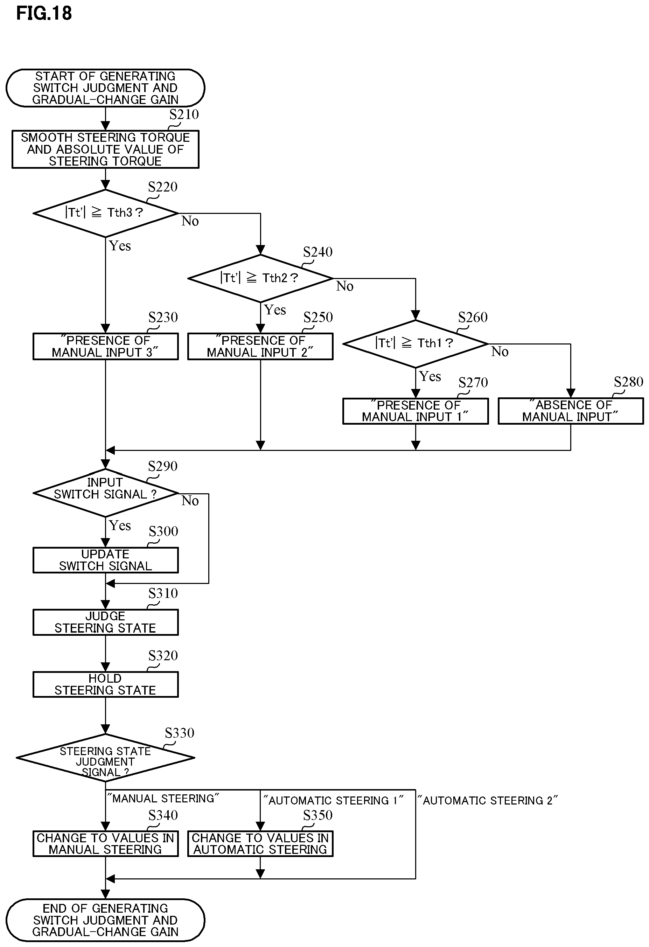

The detail of the operating example of the switch judging and gradual-change gain generating section 220 will be described with reference to a flowchart shown in FIG.18. As well, the "manual steering", the "assist control mode" and the "manual steering" are set on the previous steering state, the held switch signal SW and the steering state judgment signal Js as an initial value in the steering state judging section 224, respectively.

The inputted steering torque Tt is inputted into the manual input judging section 223 in the switch judging section 221. The manual input judging section 223 smooths the steering torque Tt at the smoothing filter section 225, and obtains the absolute value |Tt'| of the steering torque Tt' obtained by the smoothing at the absolute value processing section 226 (Step S210). The absolute value |Tt'| is inputted into the judgment processing section 227. When the absolute value |Tt'| is larger than or equal to the threshold Tth3 (Step S220), the judgment processing section 227 judges that "the manual input 3 is performed" (Step S230) . When the absolute value |Tt'| is smaller than the threshold Tth3 and is larger than or equal to the threshold Tth2 (Step S240), the judgment processing section 227 judges that "the manual input 2 is performed" (Step S250) . When the absolute value |Tt'| is smaller than the threshold Tth2 and is larger than or equal to the threshold Tth1 (Step S260), the judgment processing section 227 judges that "the manual input 1 is performed" (Step S270). When the absolute value |Tt'| is smaller than the threshold Tth1 (Step S260), the judgment processing section 227 judges that "the manual input is not performed" (Step S280). The judgment result is outputted to the steering state judging section 224 as the manual input judgment signal Jh.

The steering state judging section 224 confirms whether the switch signal SW is inputted or not (Step S290) . In the case of inputting the switch signal SW, the steering state judging section 224 updates the value of the held switch signal SW (Step S300). Using the inputted manual input judgment signal Jh, the previous steering state and the switch signal SW, the judgment of the steering state is performed in accordance with the condition judgment of the above Table 1 (Step S310). The judgment result is outputted to the gradual-change gain generating section 222 and the steering angle control section 300 as the steering state judgment signal Js, and is held as the previous steering state in the subsequent judgment (Step S320).

The gradual-change gain generating section 222 confirms the value of the steering state judgment signal Js (Step S330) . When the steering state judgment signal Js is the "manual steering", the gradual-change gain generating section 222 changes the respective gradual change gains (Gfal to Gfa4, Gft1 and Gft2) to the values in the manual steering state (0% for the gradual-change gains Gfa1 to Gfa4, and 100% for the gradual-change gains Gft1 and Gft2) (Step S340). When the steering state judgment signal Js is the "automatic steering 1", the gradual-change gain generating section 222 changes the respective gradual-change gains to the values in the automatic steering state (100% for the gradual-change gain Gfa1 to Gfa4, the value αt1 for the gradual-change gain Gft1, and the value αt2 for the gradual-change gain Gft2) (Step S350) . When the steering state judgment signal Js is the "automatic steering 2", the gradual-change gain generating section 222 does not change the respective gradual-change gains.

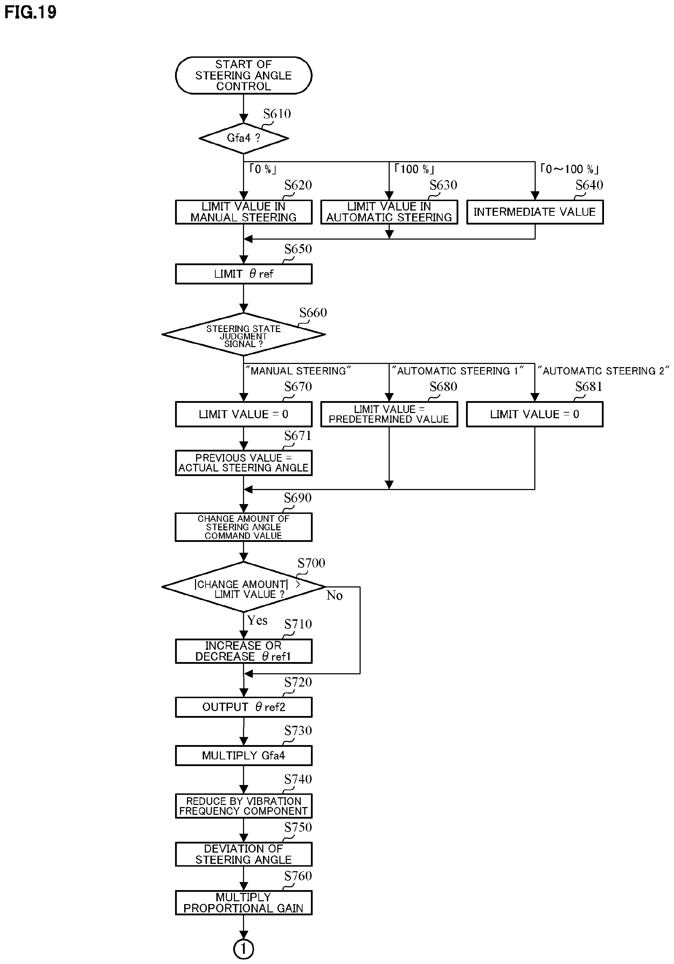

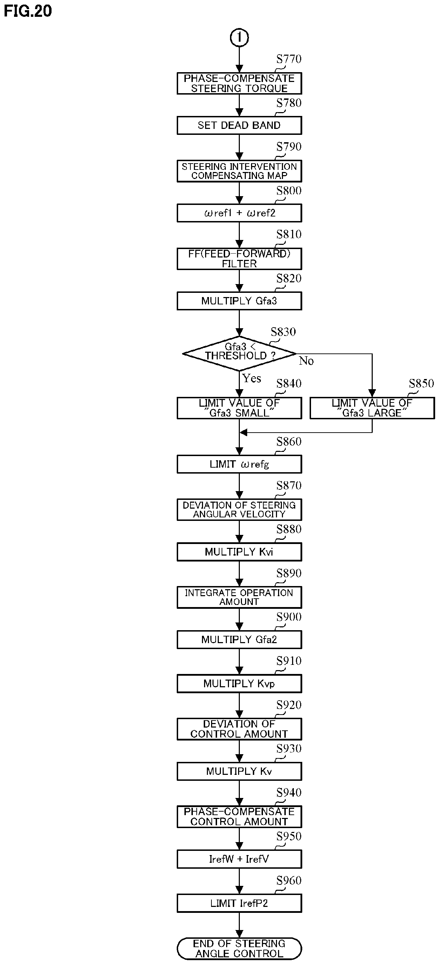

The detail of the operating example of the steering angle control section 300 will be described with reference to flowcharts shown in FIGs.19 and 20.

The steering angle command value variable-limiting section 310 confirms the value of the inputted steering angle command gradual-change gain Gfa4 (Step S610). The steering angle command value variable-limiting section 310 sets the limit values to the limit values "in the manual steering" shown in FIG.8 (Step S620) when the gradual-change gain Gfa4 is 0%, sets the limit values to the limit values "in the automatic steering" shown in FIG.8 (Step S630) when the gradual-change gain Gfa4 is 100%, and sets the limit values to intermediate values (Step S640) when the gradual-change gain Gfa4 is between 0% and 100%. The steering angle command value variable limiting section 310 limits the steering angle command value θref inputted from the vehicle-side ECU 100 by using the set limit values (Step S650), and outputs the steering angle command value θref1.

The steering angle command value θref1 is inputted into the variable-rate limiting section 320 with the steering state judgment signal Js and the actual steering angle θr. The variable-rate limiting section 320 confirms the value of the steering state judgment signal Js (Step S660). When the steering state judgment signal Js is the "manual steering" or the "automatic steering 2", the variable-rate limiting section 320 sets the limit value to zero (Steps S670 and S681). When the steering state judgment signal Js is the "manual steering", the variable-rate limiting section 320 sets the value of the stored previous steering angle command value θref1 to the value of the actual steering angle θr (Step S671). The Step S671 is a step for suppressing a sudden change of the steering angle command value by starting in a state of matching the steering angle command value θref1 with the actual steering angle θr because a value at the time of terminating the previous steering control remains at the time of starting the steering control where the handle may suddenly move by the sudden change if using its value as it is. When the steering state judgment signal Js is the "automatic steering 1", the variable-rate limiting section 320 sets the limit value to the predetermined value (Step S680). The variable-rate limiting section 320 calculates the difference (the change amount) between the steering angle command value θref1 and the previous steering angle command value θref1 (Step S690) . When the absolute value of the change amount is larger than the limit value (Step S700), the variable-rate limiting section 320 increases or decreases the steering angle command value θref1 so that the absolute value of the change amount becomes the limit value (Step S710), and outputs the result as the steering angle command value θref2 (Step S720) . When the absolute value of the change amount is smaller than or equal to the limit value (Step S700), the variable-rate limiting section 320 outputs the steering angle command value θref1 as the steering angle command value θref2 (Step S720).

The steering angle command value θref2 is multiplied with the steering angle command gradual-change gain Gfa4 at the multiplying section 391 (Step S730), and the multiplied result is outputted as the steering angle command value θref3. The steering angle command value θref3 is inputted into the handle vibration eliminating section 330.

The handle vibration eliminating section 330 reduces the steering angle command value θref3 by the vibration frequency component (Step S740), and outputs the reduction result as the target steering angle θt to the position control section 340.

The target steering angle θt is addition-inputted into the subtracting section 342 in the position control section 340. The actual steering angle θr has been subtraction-inputted into the subtracting section 342, and the deviation θe between the target steering angle θt and the actual steering angle θr is obtained at the subtracting section 342 (Step S750) . The deviation θe is inputted into the proportional gain section 341. The proportional gain section 341 multiplies the deviation θe with the proportional gain Kpp, and calculates the steering angular velocity command value ωref1 (Step S760) . The steering angular velocity command value ωref1 is inputted into the adding section 393.

Meanwhile, the steering intervention compensating section 350 inputs the vehicle speed V and the steering torque Tt, the vehicle speed V is inputted into the compensation map section 353 and the steering torque Tt is inputted into the steering intervention phase compensating section 351. The steering intervention phase compensating section 351 converts the steering torque Tt into the steering torque Tt1 with the phase compensation (Step S770). The steering torque Tt1 is inputted into the dead band setting section 352, and the dead band setting section 352 sets the dead band to the steering torque Tt1 by using the characteristic shown in FIG.11 (Step S780) and outputs the set steering torque Tt1 as the steering torque Tt2. The steering torque Tt2 and the vehicle speed V are inputted into the compensating map section 353. The compensating map section 353 calculates the steering angular velocity command value ωref2 to the steering torque Tt2 by using a steering intervention compensating map determined from the vehicle speed V based on the characteristic shown in FIG. 12 (Step S790). The steering angular velocity command value ωref2 is inputted into the adding section 393.

The steering angular velocity command values ωref1 and ωref2 inputted into the adding section 393 are added (Step S800), and the added result is outputted as the steering angular velocity command value ωrefa to the filter section 355.

The filter section 355 converts the steering angular velocity command value ωrefa into the steering angular velocity command value ωref with the FF filter (Step S810).

The steering angular velocity command value ωref is multiplied with the velocity command gradual-change gain Gfa3 at the multiplying section 392 (Step S820), and the multiplied result is inputted as the steering angular velocity command value ωrefg into the velocity command value variable-limiting section 360.

The velocity command value variable-limiting section 360 inputs the velocity command gradual-change gain Gfa3 with the steering angular velocity command values ωrefg, and confirms the value of the velocity command gradual-change gain Gfa3 (Step S830) . The velocity command value variable-limiting section 360 sets the limit values to the limit values shown by "Gfa3 SMALL" in FIG.13 (Step S840) when the gradual-change gain Gfa3 is smaller than the predetermined threshold, and sets the limit values to the limit values shown by "Gfa3 LARGE" (Step S850) when the gradual-change gain Gfa3 is larger than or equal to the predetermined threshold. The velocity command value variable-limiting section 360 limits the steering angular velocity command values ωrefg by using the set limit values (Step S860), and outputs the target steering angular velocity ωt. The target steering angular velocity ωt is inputted into the steering angular velocity control section 370.

The steering angular velocity control section 370 inputs the actual steering angular velocity ωr and the velocity control gradual-change gain Gfa2 with the target steering angular velocity ωt. The target steering angular velocity ωt is addition-inputted into the subtracting section 374, the actual steering angular velocity ωr is subtraction-inputted into the subtracting section 374, and the deviation ωe between the target steering angular velocity ωt and the actual steering angular velocity ωr is inputted into the gain multiplying section 371 (Step S870). The gain multiplying section 371 multiplies the deviation ωe with the gain Kvi (Step S880), and outputs the operation amount D1. The operation amount D1 is inputted into the integrating section 373. The integrating section 373 calculates the control amount Ir1 by integrating the operation amount D1 (Step S890), and outputs the control amount Ir1 to the multiplying section 376. The multiplying section 376 multiplies the control amount Ir1 with the velocity control gradual-change gain Gfa2 (Step S900), and outputs the control amount Ir3. The control amount Ir3 is addition-inputted into the subtracting section 375. The actual steering angular velocity ωr is inputted also into the gain multiplying section 372. The gain multiplying section 372 multiplies the actual steering angular velocity ωr with the gain Kvp (Step S910), and outputs the control amount Ir2. The control amount Ir2 is subtraction-inputted into the subtracting section 375. At the subtracting section 375, the deviation between the control amounts Ir3 and Ir2 is calculated (Step S920), and is outputted as the steering angle control current command value IrefW to the adding section 394.

The steering torque Tt is inputted also into the handle damping section 380. In the handle damping section 380, the gain section 381 multiplies the inputted steering torque Tt with the gain Kv (Step S930), and outputs the control amount Irv. The control amount Irv is phase-compensated at the damping phase compensating section 382 (Step S940), and the phase compensation result is outputted as the steering angle control current command value IrefV. The steering angle control current command value IrefV is outputted to the adding section 394.

The steering angle control current command values IrefW and IrefV inputted into the adding section 394 are added (Step S950), and the added result is inputted as the steering angle control current command value IrefP2 into the steering angle control current command value limiting section 390.

The steering angle control current command value limiting section 390 limits the steering angle control current command value IrefP2 by using the limit values of the characteristic shown in FIG.16, and outputs the steering angle control current command value IrefPl (Step S960).

As well, the order of the operation of the steering angle control section 300 and the operation of the assist control section 230 may be reversed, or the operations may be performed in parallel. In the operation of the steering angle control section 300, the order of the operation to the calculation of the steering angular velocity command value ωref1 and the operation to the calculation of the steering angular velocity command value ωref2, which are inputted into the adding section 393, the order of the operation to the calculation of the steering angle control current command value IrefW and the operation to the calculation of the steering angle control current command value IrefV, which are inputted into the adding section 394, and so on, may be reversed respectively, or both operations may be performed in parallel respectively.

Effects of the present embodiment will be described based on results of simulations.

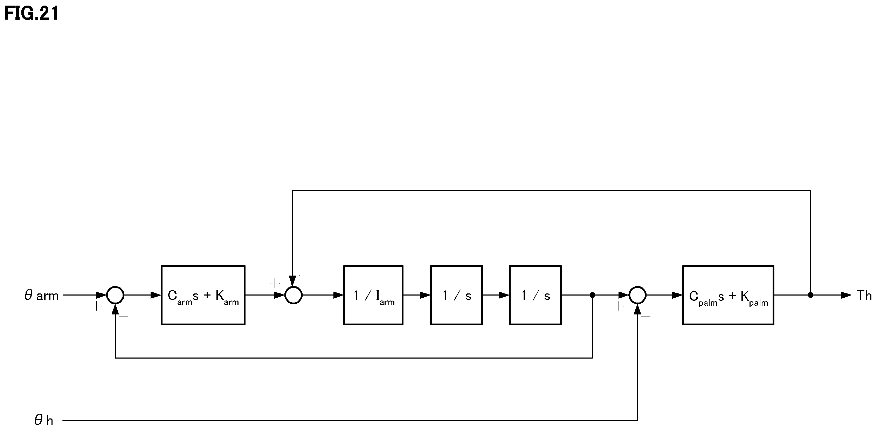

In the simulations, a vehicle motion model and a steering model of the driver are set as a plant model of the plant 400. It is possible to use a model shown in, for example, "Motion and control of an automobile", Masato Abe, Tokyo Denki University, Tokyo Denki University Press, published on September 20, 2009, second impression of first edition, chapter 3 (p. 49 - 105), chapter 4 (p.107 - 130) and chapter 5 (p.131 - 147), as the vehicle motion model, and use a model shown in, for example, "A study with respect to an estimation of steering feeling of a vehicle considering a musculoskeletal characteristic of an arm", Daisuke Yokoi, master's thesis, Master's Programs, Mechanical Engineering, Graduate School of Engineering, Mie University, received on February 6, 2007, chapter 2 (p. 3 - 5) and chapter 3 (p. 6 - 9) (Reference Document) as the steering model. It is possible to use another model without limited to these . The steering model used in the present simulation is shown in FIG.21 as a reference. In FIG.21, "Cₐᵣₘ" and "Cₚₐₗₘ" are viscosity coefficients, "Kₐᵣₘ" and "Kₚₐₗₘ" are spring constants, and "Iₐᵣₘ" is an inertia moment of an arm. The steering wheel angle θh is inputted from a mechanical model (a mechanical transfer characteristic) to the steering model (a steering transfer characteristic of the driver), and the steering wheel manual input torque Th is outputted from the steering model to the mechanical model. Hereinafter, a target angle described in Reference Document is referred to a driver's target angle (a steering target angle) θarm. Further, the model shown in Reference Document adds a mass system of the arm to a column inertia moment, however, by defining a force applied from a palm to the steering wheel as the steering wheel manual input torque Th, no hindrance occurs even if performing a simulation assuming that the spring constant Kₚₐₗₘ and the viscosity coefficient Cₚₐₗₘ which operate between an angle of a palm and the steering wheel angle θh are large enough, and the present simulation is performed in this way. It is also assumed that followability of a motor current to a current command value is fast enough, an influence by operation of the current control and driving section 250 is slight, and the current command value is equal to the motor current. Furthermore, the vehicle speed is assumed constant.

First, an effect of the steering intervention compensation will be described.

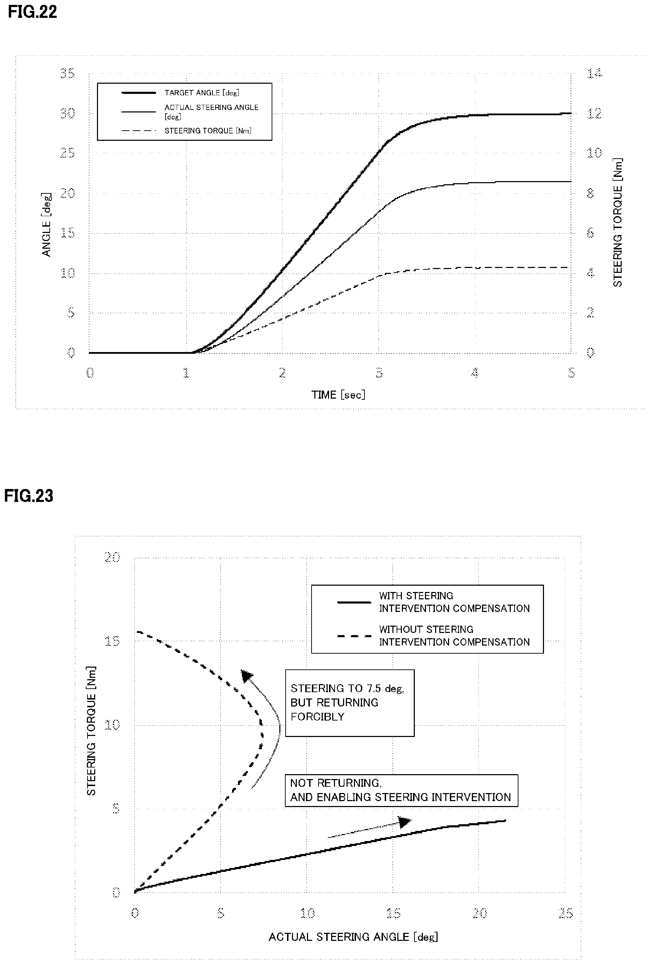

Assuming the steering angle command value θref to be constant at 0 [deg], a simulation of the automatic steering where the driver's target angle θarm is inputted is performed. As a reference, time responses of the actual steering angle θr and the steering torque Tt to a time change of the driver's target angle θarm in a simulation considering the steering model of the driver under the same conditions, are shown in FIG.22. In FIG.22, the vertical axis indicates an angle [deg] and a steering torque [Nm], the horizontal axis indicates a time [sec], the thick solid line shows the driver's target angle θarm, the thin solid line shows the actual steering angle (the steering wheel angle in the present embodiment) θr, and the broken line shows the steering torque Tt.

As well, in FIG.22, the assist control output gradual-change gain Gft1 is 0%, that is, the assist control does not operate. Further, FIG.22 shows an example of a simulation for describing a situation where the actual steering angle θr and the steering torque Tt are changed as the driver's target angle θarm is changed.

With respect to changes of the actual steering angle θr and the steering torque Tt in the case of inputting the driver's target angle θarm like this, the case of performing the velocity control with the PI-control without the steering intervention compensation and the case of performing the steering intervention compensation are compared. In the former case, the assist control output gradual-change gain Gft1 and the assist map gradual-change gain Gft2 are set to 100% for comparison with the present embodiment, and difference between the integral methods is verified. In the latter case, the assist control output gradual-change gain Gft1 is set to 0%. Further, in a conventional prior art (for example, Patent Document 1), an assist control command value is 0 [deg] in the steering control before the switching, however, since the steering intervention in this case is presumed to be more difficult than in the former case, this case is omitted.

A result of the simulation is shown in FIG. 23. The vertical axis indicates a steering torque [Nm], the horizontal axis indicates an actual steering angle [deg], the broken line shows the case without the steering intervention compensation, and the solid line shows the case with the steering intervention compensation. In the steering intervention compensating section 350, the width of the dead band is set to zero, and the steering intervention compensating map is set so as to linearly change from an origin (that is, this is the same as the case that the steering torque Tt2 is obtained by multiplying the steering torque with the constant gain).

As shown by the broken line in FIG.23, in the case without the steering intervention compensation, the steering can be performed until the actual steering angle θr becomes 7.5 [deg], however, since a velocity deviation (a deviation between the steering angular velocity command value and the actual steering angular velocity) is continuously stored by the influence of the integral of the PI-control in the velocity control, the steering forcibly returns to the position corresponding to the steering angle command value θref (= 0 [deg]) eventually. Moreover, a very large steering torque being larger than or equal to 15 [Nm] occurs, and the steering by the driver becomes difficult.

On the contrary, as shown by the solid line in FIG.23, in the case with the steering intervention compensation, the steering can be performed until the actual steering angle θr becomes about 22 [deg], and does not return to the position corresponding to the steering angle command value θref (=0 [deg]). This is because the steering angular velocity command value ωref2 outputted from the steering intervention compensating section 350 is added to the steering angular velocity command value ωref1 outputted from the position control section 340, and the velocity deviation between the steering angular velocity command value ωref and the actual steering angular velocity ωr in the steering state balances in the vicinity of "0". In this way, the function of the steering intervention compensating section 350 enables the steering intervention by the driver. Further, an increase in the steering intervention compensation gain Ktp enables easier steering.

Next, an effect of the deadband in the steering intervention compensation will be described.

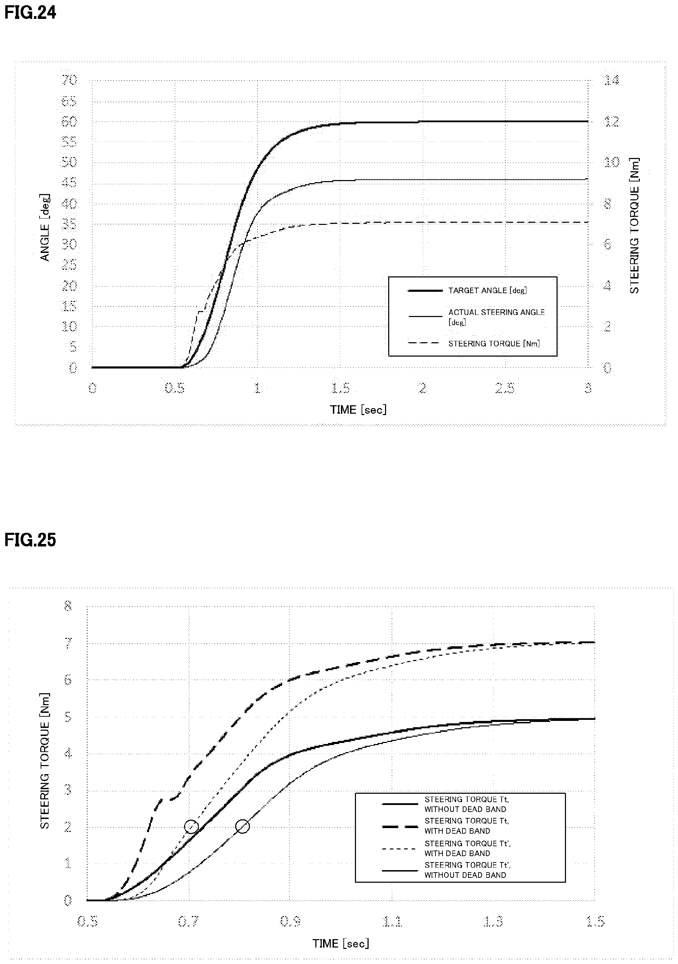

Assuming the steering for avoiding an emergency detour, the simulation is performed by inputting the driver's target angle θarm as shown in FIG.24. In FIG.24 as well as FIG.22, the vertical axis indicates the angle [deg] and the steering torque [Nm], the horizontal axis indicates the time [sec], the thick solid line shows the driver's target angle θarm, and the thin solid line and the broken line show the time responses of the actual steering angle θr and the steering torque Tt to the time change of the driver's target angle θarm, respectively. As shown in the thick solid line of FIG.24, the driver's target angle θarm rises from 0.5 [sec] and changes up to 60 [deg].

In the case that such a driver' s target angle θarm is inputted, the case that positive and negative thresholds having +2.5 [Nm] and -2.5 [Nm] of the steering torque Tt1 are set as the dead band is compared with the case of no dead band. The comparison result is shown in FIG.25. The manual input judging section 223 in the switch judging and gradual-change gain generating section 220 smooths the steering torque Tt by using the smoothing filter section 225 where the primary LPF whose cutoff frequency is 1.5 [Hz] and the primary LPF whose cutoff frequency is 3.0 [Hz] are connected in series. When the absolute value |Tt'| of the smoothed steering torque Tt' is larger than or equal to the threshold Tth3 that is set to 2 [Nm], it is judged that "the manual input is performed (the manual input 3 is performed)".

In FIG.25, the vertical axis indicates the steering torque [Nm], the horizontal axis indicates the time [sec], the thick solid line shows the steering torque Tt in the case without the dead band, the broken line shows the steering torque Tt in the case with the dead band, the dotted line shows the steering torque Tt' in the case with the dead band, and the thin solid line shows the steering torque Tt' in the case without the dead band. In FIG.25, the portions that are enclosed in the circles are the time when the absolute value of the steering torque Tt' reaches the threshold Tth3. The timings when "the manual input is performed" is judged are about 0.7 [sec] in the case with the dead band and about 0.8 [sec] in the case without the dead band. The case with the dead band can be verified by about 0.1 [sec] faster than the case without the dead band. Thus, by disposing the dead band, the faster judgement can be performed.

Next, an effect for a handle vibration occurring in the steering angle control performed during the automatic steering in the case of performing only the steering angle control without the steering intervention by the driver (the handle manual input torque Th=0 [Nm]), will be described.

Before describing the effect for the handle vibration, followability to the steering angle command value θref and the effect with the FF filter in the filter section 355 will be described in order to describe a situation where the actual steering angle θr follows the steering angle command value θref. Even in the simulation for verifying the present effects, in order to verify only the steering angle control characteristic, the setting that neither the steering intervention by the driver nor the steering intervention compensation is performed is adopted.

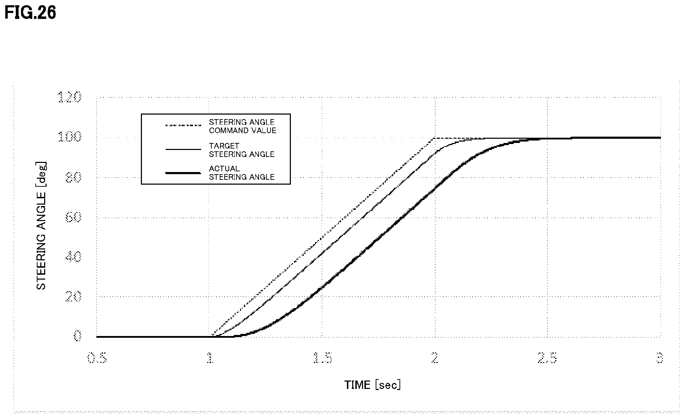

FIG.26 shows an example of a time response in the case of changing the steering angle command value θref from 0 [deg] to 100 [deg] in a ramp state. In FIG. 26, the vertical axis indicates the steering angle [deg], the horizontal axis indicates the time [sec], and the dotted line shows the steering angle command value θref. Situations of responses of the target steering angle θt outputted from the handle vibration eliminating section 330 having a primary LPF whose cutoff frequency is 2 [Hz] and the actual steering angle θr to the steering angle command value θref, are shown by the thin solid line and the thick solid line respectively. From FIG.26, it is found out that the target steering angle θt and the actual steering angle θr follow the steering angle command value θref.

From the above description, it can be said that both the steering intervention and the follow-up of the steering angle during the automatic steering can be achieved.

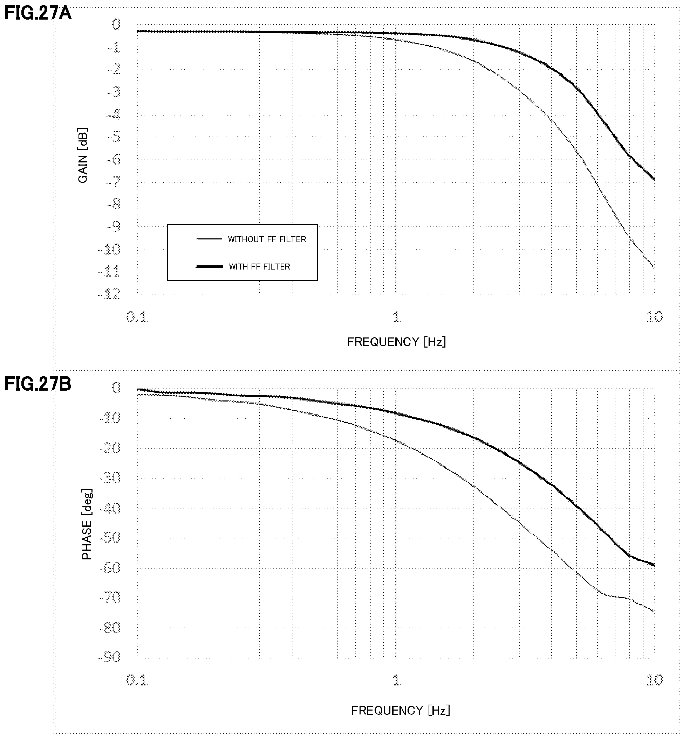

In the simulation of the FF filter, first, frequency characteristics from the steering angular velocity command value ωrefa to the actual steering angular velocity ωr are compared in the case without the FF filter and in the case with the FF filter. As the FF filter, a filter which performs a phase lead compensation and where a cutoff frequency of a numerator is 3 [Hz] and a cutoff frequency of a denominator is 5 [Hz], is used, and the case without the FF filter is simulated by using a gain whose magnitude is "1". The result is shown in FIGs.27A and 27B. FIG.27A shows a gain characteristic, FIG.27B shows a phase characteristic, the thin solid line shows the case without the FF filter, and the thick solid line shows the case with the FF filter. In the case of defining a response frequency (a threshold frequency) of the steering angular velocity control as a frequency where the gain is attenuated to -3 [dB], the response frequency is about 3 [Hz] in the case without the FF filter (shown by the thin solid line), is about 5 [Hz] in the case with the FF filter (shown by the thick solid line), and becomes a higher value in the case with the FF filter. Therefore, it can be found out that the response of the steering angular velocity control is improved due to the FF filter.

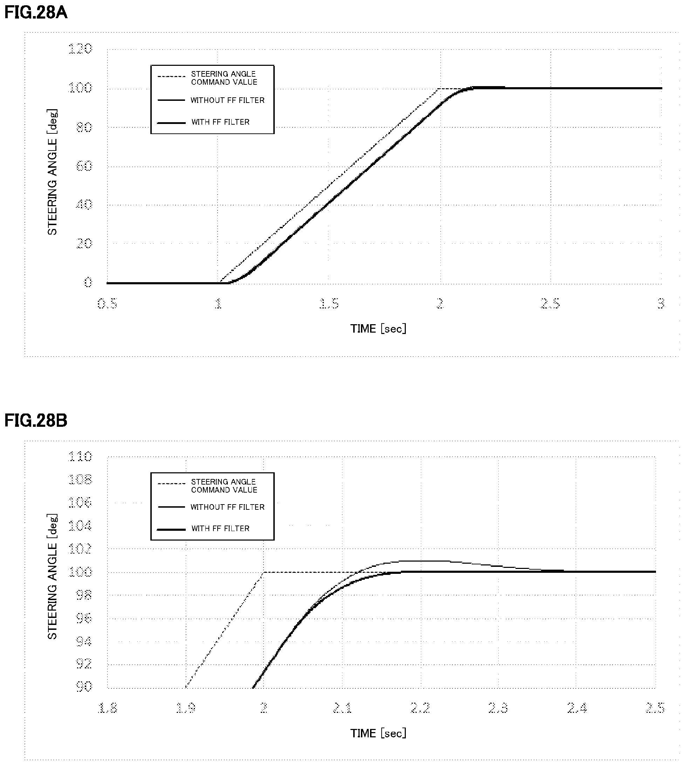

The proportional gain Kpp used in the position control section 340 of the steering angle control section 300 is possible to increase by using the FF filter. This leads to an effect of enabling the improvement of the responsiveness of the steering angle control. In order to verify this effect, a simulation is performed by changing the simulation conditions set for the time response of the steering angle control shown in FIG. 26. Concretely, the proportional gain Kpp is doubled, and it is assumed that the handle vibration eliminating section 330 does not exist by using a gain whose magnitude is "1" as the handle vibration eliminating section 330. Time responses under these conditions are shown in FIGs.28A and 28B. As with FIG.26, FIGs.28A and 28B show time responses in the case of changing the steering angle command value θref from 0 [deg] to 100 [deg] in a ramp state, the vertical axis indicates the steering angle [deg], the horizontal axis indicates the time [sec], and the dotted line shows the steering angle command value θref. With respect to the steering angle command value θref, the time response in the case without the FF filter is shown by the thin solid line, and the time response in the case with the FF filter is shown by the thick solid line. To clarify a difference, the graph obtained by enlarging a part of FIG. 28A is shown in FIG. 28B. From FIGs.28A and 28B, it is found out that the steering angle overshoots from 2.1 [sec] past to about 2.4 [sec] in the case without the FF filter, however, the steering angle follows the steering angle command value θref without overshooting in the case with the FF filter. Since the responsiveness of the steering angular velocity control is improved by using the FF filter, the overshoot becomes hard to occur even if the proportional gain Kpp is increased. As a result, the responsiveness of the steering angle control can be improved. Similarly, the responsiveness of the steering intervention can be also improved.

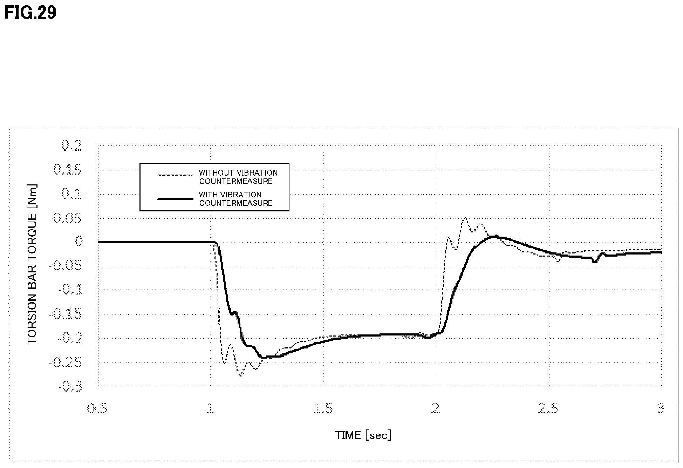

In the simulation for verifying the effect for the handle vibration, a difference of a time response of the torsion bar torque between with and without the handle vibration eliminating section 330 and the handle damping section 380, is examined in the case of performing the steering angle control with respect to the same steering angle command value θref as shown in FIGs.26, 28A and 28B. The handle vibration eliminating section 330 uses the primary LPF whose cutoff frequency is 2 [Hz]. The handle damping section 380 uses the gain Kv by which a torque converted into a column shaft becomes equivalent to 10 [Nm] for the torsion bar torque being 1 [Nm], and performs the phase lead compensation with a primary filter where a cutoff frequency of a numerator is 10 [Hz] and a cutoff frequency of a denominator is 20 [Hz] . The result is shown in FIG.29. In FIG.29, the vertical axis indicates the torsion bar torque [Nm], the horizontal axis indicates the time [sec], the solid line shows the case with the vibration countermeasure by the handle vibration eliminating section 330 and the handle damping section 380, and the dotted line shows the case without the vibration countermeasure. From FIG.29, it is found out that the handle vibration is suppressed by the handle vibration eliminating section 330 and the handle damping section 380.

As the last of the description of the effect, an effect for a problem that the integral value of the I-control accumulates excessively by increase in the steering angular velocity at the start of the steering angle control and the steering angle control command value may become excessive (a problem in Patent Document 3 and so on), will be described.

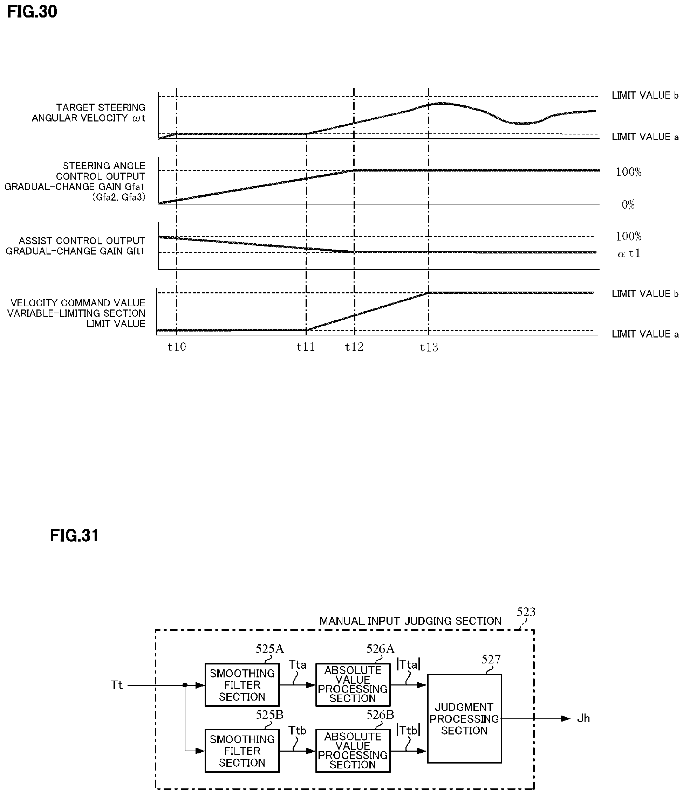

FIG.30 shows time changes of the target steering angular velocity ωt, the gradual-change gains and the limit value used at the velocity command value variable-limiting section 360 when the state changes from the manual steering state to the automatic steering state. Assuming that the velocity control gradual-change gain Gfa2 and the velocity command gradual-change gain Gfa3 are changed in synchronous with the steering angle control output gradual-change gain Gfa1, only the gradual-change gain Gfa1 is shown in FIG.30. Assuming that the assist control output gradual-change gain Gft1 and the assist map gradual-change gain Gft2 are also changed in synchronous with the gradual-change gain Gfa1, only the situation of the change of the gradual-change gain Gft1 is shown as a reference. Further, the magnitude of the limit value used at the velocity command value variable-limiting section 360 is set so as to be fixed at a small value when the gradual-change gain Gfa3 is smaller than the predetermined threshold, and gradually increase when the gradual-change gain Gfa3 is larger than or equal to the predetermined threshold.

The steering angular velocity command value ωref is multiplied with the velocity command gradual-change gain Gfa3, is limited at the velocity command value variable-limiting section 360, and becomes the target steering angular velocity ωt. When the shift from the manual steering state to the automatic steering state is started, the gradual-change gain Gfa3 gradually increases from "0", and the target steering angular velocity ωt also gradually increases from "0". Thereafter, when the steering angular velocity command value ωrefg inputted into the velocity command value variable-limiting section 360 reaches the limit value (the limit value "a") at the time point t10, the target steering angular velocity ωt becomes constant at the limit value "a", however, the gradual-change gain Gfa3 continuously increases. When the gradual-change gain Gfa3 becomes the predetermined threshold at the time point t11, the limit value gradually increases, and the target steering angular velocity ωt also increases correspondingly. When the gradual-change gain Gfa3 becomes 100% at the time point t12, in addition, the limit value becomes the limit value "b" at the time point t13, the target steering angular velocity ωt changes within the limit value "b". Since the target steering angular velocity ωt is limited by the limit value "a" and is limited by multiplication of the velocity control gradual-change gain Gfa2 at the steering angular velocity control section 370 between the time points t10 and t13, excessive accumulation of the integral value in the steering angular velocity control section 370 is suppressed, and the current command value causing the uncomfortable feeling to the driver as an output of the steering angle control can be reduced. After the transition of the limit value is ended (that is, after the time point t13), the steering angular velocity command value ωref is not limited by the gradual-change gain Gfa3 and the velocity command value variable-limiting section 360, and a signal in the steering angular velocity control section 370 is not also limited by the gradual-change gain Gfa2, so that it is possible to shift to the normal steering angle control.

The second embodiment of the present invention will be described.

In the second embodiment, the steering torque is filter-processed by the smoothing filters having the different characteristic and the manual input judgment is performed based on the calculated steering torque (the smoothed steering torque) by the respective filter processes, at the manual input judging section in the switch judging and gradual-change gain generating section. Thereby, for example, by using the high speed response filter to the outputting signal in addition to using the filter for removing the noise components in the high frequency band, the response to the abrupt manual input torque for avoiding the emergency detour and so on can be performed and the accuracy in the manual input judgment can be improved. The plural thresholds to the respective smoothed steering torques as well as the first embodiment can be adapted. Thereby, the appropriate handling in harmony with the magnitude of the manual input torque can be performed.

FIG.31 shows the configuration example of the manual input judging section 523 in the second embodiment. In comparison with the manual input judging section 223 of the first embodiment shown in FIG.5, the two smoothing filter sections and the two absolute value processing sections are provided.

The smoothing filter sections 525A and 525B have a smoothing filter and output the steering torques after the smoothing (the smoothed steering torques) Tta and Ttb smoothed by the smoothing filter A and the smoothing filter B, respectively. The smoothing filter A has a slower response to the outputting signal than the smoothing filter B, and has a more excellent characteristic in removing the noise components in the high frequency band than the smoothing filter B. The smoothing filter B has a higher response to the outputting signal than the smoothing filter A, and has an inferior characteristic in removing the noise components in the high frequency band to the smoothing filter A. By concurrently using the smoothing filter A and the smoothing filter B whose characteristic is a high speed response, the abrupt manual input torque in the steering for avoiding the emergency detour and so on can be responded and the judgment in the case of performing the steering by the manual input can be easier performed. The steering torques Tta and Ttb are inputted into the absolute value processing sections 526A and 526B, respectively. The absolute processing section 526A outputs the absolute value (the absolute value data) |Tta| of the steering torque Tta to the judgment processing section 527. The absolute processing section 526B outputs the absolute value (the absolute value data) |Ttb| of the steering torque Ttb to the judgment processing section 527. The judgment processing section 527 judges three kinds of "presence of the manual input" and one kind of "absence of the manual input" by using plural predetermined thresholds TthAl, TthA2, TthA3 and TthB (0 ≤ TthA1 ≤ TthA2 ≤ TthA3 ≤ TthB).

Specifically, in the case that "the absolute value |Tta| is equal to or more than the threshold TthA3" or "the absolute value | Ttb | is equal to or more than the threshold TthB", the judgment processing section 527 judges "the manual input 3 is performed". In the case that "the absolute value |Tta| is equal to or more than the threshold TthA2 and is less than the threshold TthA3", the judgment processing section 527 judges "presence of the manual input 2". In the case that "the absolute value |Tta| is equal to or more than the threshold TthA1 and is less than the threshold TthA2", the judgment processing section 527 judges "presence of the manual input 1". In the case that "the absolute value |Tta| is less than the threshold TthA1", the judgment processing section 527 judges "absence of the manual input". The judgment result is outputted as the manual input judgment signal Jh.

As well, if the smoothing filter sections 525A and 525B have the above filter characteristics, the filters other than the smoothing filter may be used. Further, in harmony with the manual input torque in which the filter is responded, the manual input judging section 523 may have the three filter sections or more. The judgment processing section 527 performs the judgments by using the four thresholds. The number of the thresholds is not limited to four. The number of the thresholds other than four may be used in the judgment or the plural thresholds to the steering torque Ttb may be used. Thereby, more flexible judgment can be performed.

Compared with the operating example of the first embodiment, the operation of the manual input judging section of the operating example of the second embodiment is different from that of the operating example of the first embodiment.

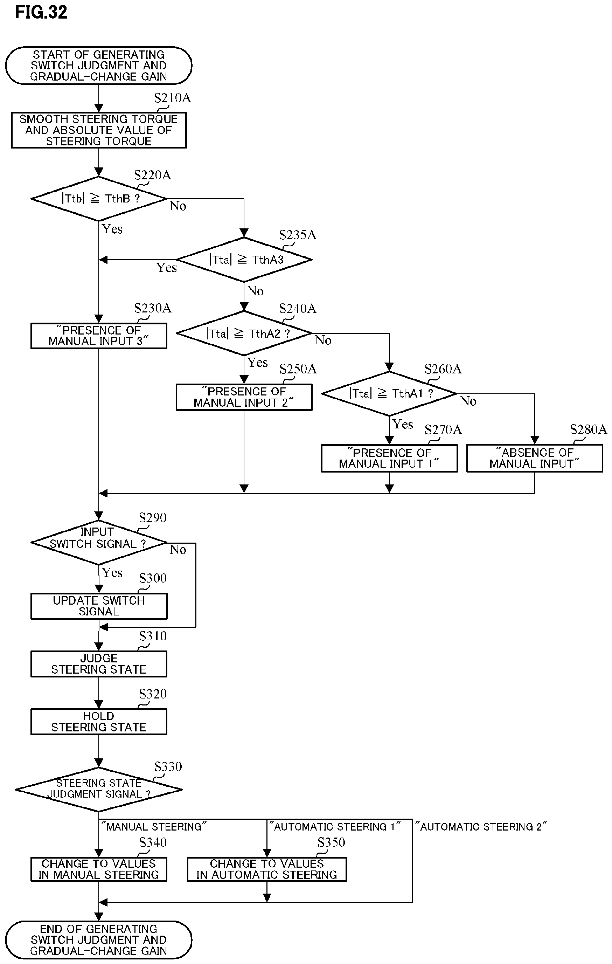

The operating example of the switch judging and gradual-change gain generating section including the manual input judging section 523 in the second embodiment will be described with reference to the flowchart of FIG.32.

The inputted steering torque Tt is inputted into the manual input judging section 523. The steering torque Tt is smoothed at the smoothing filter sections 525A and 525B in the manual input judging section 523, and the absolute values |Tta| and |Ttb| of the steering torques Tta and Ttb after smoothing are obtained at the absolute value processing sections 526A and 526B in the manual input judging section 523 (Step S210A) . The absolute values |Tta| and |Ttb| are inputted into the judgment processing section 527. In the case that "the absolute value |Ttb| is equal to or more than the threshold TthB" (Step S220A), the judgment processing section 527 judges "presence of the manual input 3" (Step S230A). In the case that "the absolute value |Ttb| is less than the threshold TthB" (Step S220A), and "the absolute value |Tta| is equal to or more than the threshold |TthA3|" (Step S235A), the judgment processing section 527 judges "presence of the manual input 3" (Step S230A) . In the case that "the absolute value |Ttb| is less than the threshold TthB" (Step S220A), and "the absolute value |Tta| is equal to or more than the threshold TthA2 and is less than the threshold TthA3" (Step S240A), the judgment processing section 527 judges "presence of the manual input 2" (Step S250A). In the case that "the absolute value |Ttb| is less than the threshold TthB" (Step S220A), and "the absolute value |Tta| is equal to or more than the threshold TthAl and is less than the threshold TthA2" (Step S260A), the judgment processing section 527 judges "presence of the manual input 1" (Step S270A) . In the case that "the absolute value |Ttb| is less than the threshold TthB" (Step S220A), and "the absolute value |Tta| is less than the threshold TthA1" (Step S260A), the judgment processing section 527 judges "absence of the manual input" (Step S280A). The judgment result is outputted to the steering state judging section 224 as the manual input judgment signal Jh. The operations (from the Step S290 to the Step S350) after that are the same as the first embodiment.

The third embodiment of the present invention will be described.

Although the manual input judging section performs the manual input judgment by using the steering torque in the first and second embodiments, the manual input judgment is performed by using the steering torque and an error between the estimation steering angle and the actual steering angle in the third embodiment. In comparison with the second embodiment, in the third embodiment, the error between the estimation steering angle and the actual steering angle is used in the manual input judgment. Moreover, the manual input judgment may be performed by using only the error between the estimation steering angle and the actual steering angle .

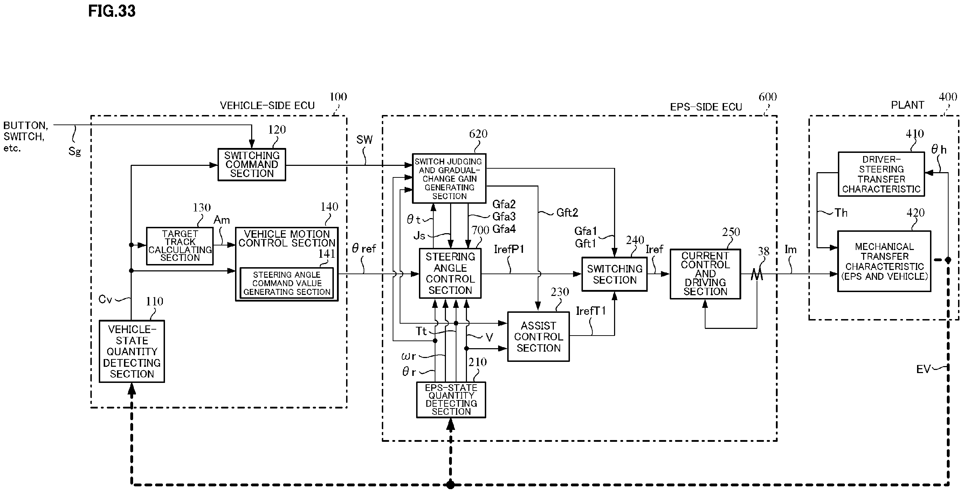

Fig.33 shows the configuration example of the whole vehicle system in the third embodiment. The steering angle control current command value IrefP1 and the target steering angle θt are outputted from the steering angle control section 700. The target steering angle θt is inputted into the switch judging and gradual-change gain generating section 620. The configuration and the operation of the steering angle control section 700 are the same as those of the steering angle control section 300 in the second embodiment, except that the target steering angle θt from the handle vibration eliminating section 330 is outputted to the position control section 340 and the switch judging and gradual-change gain generating section 620.

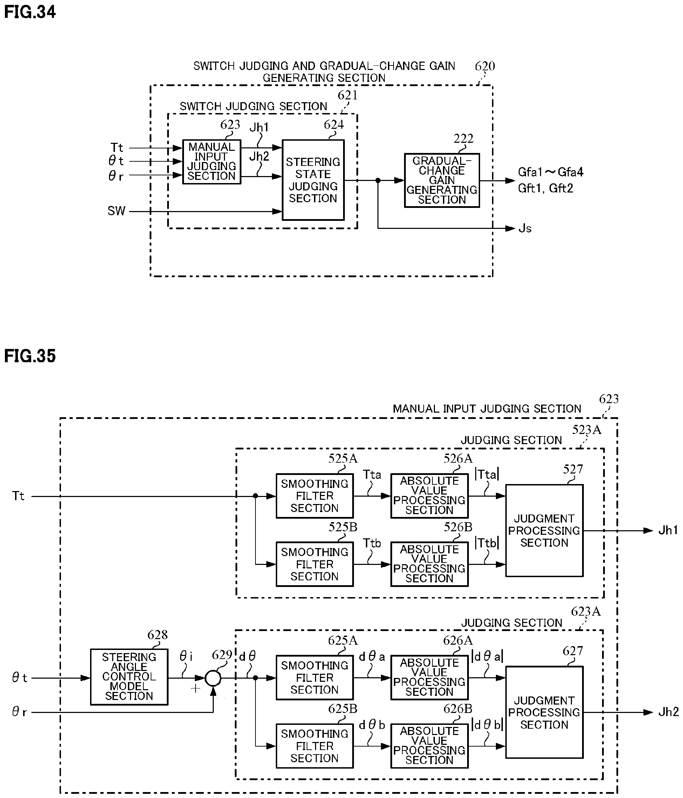

FIG.34 shows the configuration example of the switch judging and gradual-change gain generating section 620 in the third embodiment. The switch judging and gradual-change gain generating section 620 comprises the switch judging section 621 and the gradual-change gain generating section 222, and the switch judging section 621 comprises the manual input judging section 623 and the steering state judging section 624. Since the gradual-change gain generating section 222 is the same as that of the second embodiment, the explanation is omitted.

The manual input judging section 623 judges whether the manual input is presented or not, by using the steering torque Tt, the actual steering angle θr and the target steering angle θt.

FIG. 35 shows the configuration example of the manual input judging section 623. Compared with the manual input judging section 523 in the second embodiment shown in FIG.31, the manual input judging section 623 comprises the judging section 523A whose configuration is the same as that of the manual input judging section 523, the judging section 623A, the steering angle control model section 628 and the subtracting section 629. The judging section 623A comprises the smoothing filter sections 625A and 625B, the absolute value processing sections 626A and 626B, and the judgment processing section 627.

By using the same operation in the manual input judging section 523, the judging section 523A outputs the manual input judgment signal Jh1 (corresponding to the manual input judgment signal Jh in the second embodiment) . The smoothing filter having the smoothing filter sections 525A and 525B functions as the smoothing filter for the torque. The plural predetermined thresholds are used as the torque threshold in the judgment processing section 527.

The steering angle control model section 628 calculates the estimation steering angle θi from the target steering angle θt, and the estimation steering angle θi is addition-inputted into the subtracting section 629. In order to estimate the actual steering angle θr in the automatic steering state, the steering angle control model section 628 sets the transfer characteristic of the actual steering angle θr to the target steering angle θt and estimates the actual steering angle by using the transfer characteristic. When a deviation between the estimation steering angle θi, which is the estimated actual steering angle, and the actual steering angle θr is existed, it can be judged that the steering intervention is performed by the driver. The transfer characteristic of the actual steering angle θr to the target steering angle θt is defined by the transfer function, the difference equation (the differential equation), or the like. By the experiment or the simulation, the target steering angle θt is inputted into the transfer characteristic, and the actual steering angle θr that is the output of the transfer characteristic is obtained by using a general identification method. In the case of improving the estimation accuracy, the transfer characteristic is identified every vehicle speed. The transfer function may be expressed by the expression based on the plant model, which represents the frequency characteristics of the vehicle and the EPS, and the control model, which represents the frequency characteristic of the steering angle control section.

The estimation steering angle θi is addition-inputted into the subtracting section 629, and the actual steering angle θr is subtraction-inputted into the subtracting section 629. The error dθ between the estimation steering angle θi and the actual steering angle θr is calculated at the subtracting section 629, and is inputted into the judging section 623A.

The judging section 623A, which has the same configuration and performs the same operation as the judging section 523A, operates to the error dθ and smooths the error dθ at the smoothing filter sections 625A and 625B having the smoothing filter (the smoothing filter for the error) . The absolute values (the absolute data) |dθa| and |dθb| of the errors after smoothing (the smoothing errors) dθa and dθb are obtained at the absolute value processing sections 626A and 626B, respectively. The judgment processing section 627 judges three kinds of "presence of the manual input" and one kind of "absence of the manual input" to the absolute values |dθa| and |dθb| by using plural predetermined thresholds (error thresholds) θthA1, θthA2, θthA3 and θthB (0 ≤ θthA1 ≤ θthA2 ≤ θthA3 ≤ θthB). The smoothing filter sections 625A and 625B have a smoothing filter C and a smoothing filter D, respectively. As well as the case of the filter A and the filter B, the smoothing filter C has a slower response to the outputting signal than the smoothing filter D, and has a more excellent characteristic in removing the noise components in the high frequency band than the smoothing filter D. The smoothing filter D has a higher response to the outputting signal than the smoothing filter C, and has an inferior characteristic in removing the noise components in the high frequency band to the smoothing filter C. Simply, the characteristic of the smoothing filter C may be the same as that of the smoothing filter A, and the characteristic of the smoothing filter D may be the same as that of the smoothing filter B. The judgment result is outputted as the manual input judgment signal Jh2.

As well, the judgment processing sections 527 and 627 perform the judgments by using the four thresholds. The number of the thresholds is not limited to four. The number of the thresholds other than four may be used in the judgment. Thereby, the flexible judgment can be performed.

The steering state judging section 624 judges the steering state by the switch signal SW from the vehicle-side ECU 100 and the manual input judgment signals Jh1 and Jh2. As well as the case of the second embodiment, "automatic steering 1", "automatic steering 2" and "manual steering" are existed in the steering state . The "automatic steering 1" is corresponding to a normal automatic steering state. The latest steering state is judged based on the switch signal SW, the manual input judgment signals Jh1 and Jh2, and the previous steering state. When judging, the manual input judgment signals Jh1 is assigned to one of the judgment signals α or β, and the manual input judgment signals Jh2 is assigned to the other of the judgment signals α or β. For example, in the case that the manual input judgment signal Jh1 is the judgment signal α, the manual input judgment signal Jh2 is assigned to the judgment signal β. In the case that the manual input judgment signal Jh2 is the judgment signal α, the manual input judgment signal Jh1 is assigned to the judgment signal β. In the present embodiment, the manual input judgment signals Jh1 and Jh2 are the judgment signals α and β, respectively. The judgment is performed as follows.

### [Condition A]

In the case that the previous steering state is "automatic steering 1" or "automatic steering 2", and the switch signal SW is "assist control mode" or the judgment signal α is "presence of the manual input 3", the steering state is judged as "manual steering".

### [Condition B]

In the case that the previous steering state is "automatic steering 1", the switch signal SW is "steering angle control mode", the judgment signal α is "presence of the manual input 2", and the judgment signal β is not "presence of the manual input 3", the steering state is judged as "automatic steering 2".

### [Condition C]

In the case that the previous steering state is "automatic steering 2", the switch signal SW is "steering angle control mode", the judgment signal α is "presence of the manual input 1" or "presence of the manual input 2", and the judgment signal β is not "presence of the manual input 3", the steering state is judged as "automatic steering 2".

### [Condition D]

In the case that the previous steering state is "automatic steering 2", the switch signal SW is "steering angle control mode", the judgment signal α is "absence of the manual input", and the judgment signal β is "absence of the manual input", the steering state is judged as "automatic steering 1".

### [Condition E]

In the case that the previous steering state is "manual steering", the switch signal SW is "steering angle control mode", the judgment signal α is "absence of the manual input", and the judgment signal β is "absence of the manual input", the steering state is judged as "automatic steering 1".

In detail, the above conditions A to E are represented by the following Tables 2 to 4. In the Table 2, "-" means any value (that is, this value is not involved in the judgment) . The word "continue" means that the steering state is not changed. The conditions in the respective columns are coupled with the "AND" condition, and the steering state is judged. The Table 3 shows the judgment results in the case that the previous steering state is "automatic steering 1" and the switch signal SW is "steering angle control mode" in the Table 2. The Table 4 shows the judgment results in the case that the previous steering state is "automatic steering 2" and the switch signal SW is "steering angle control mode" in the Table 2. In the Tables 3 and 4, "α" indicates "the judgment signal α" and "β" indicates "the judgment signal β".

**[Table 2]**

| previous steering state | switch signal SW | judgment signal α | judgment signal β | judgment result |
|---|---|---|---|---|
| automatic steering 1 | assist control | - | - | manual steering |
| | mode steering angle control mode | * see Table 3 | | |
| automatic steering 2 | assist control mode | - | - | manual steering |
| | steering angle control mode | * see Table 4 | | |
| manual steering | assist control mode | - | - | (continue) |
| | steering angle control mode | absence of manual input | absence of manual input | automatic steering 1 |
| | | presence of manual input 1, 2 or 3 | presence of manual input 1, 2 or 3 | (continue) |

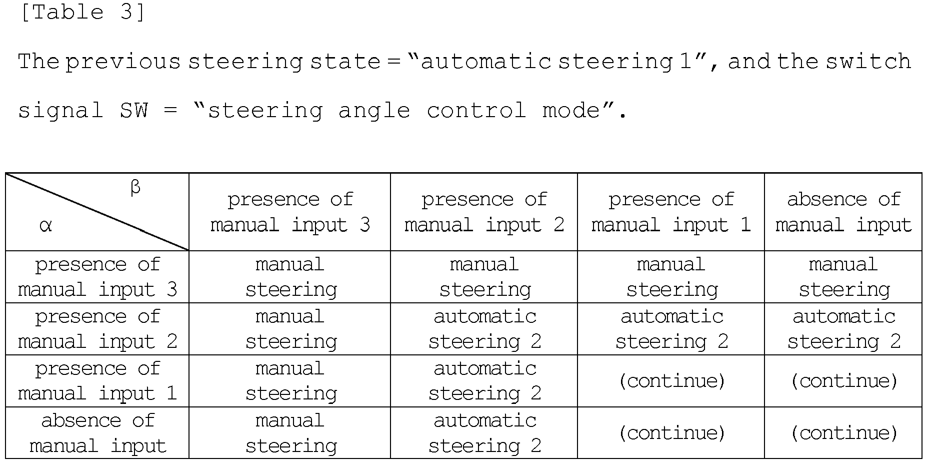

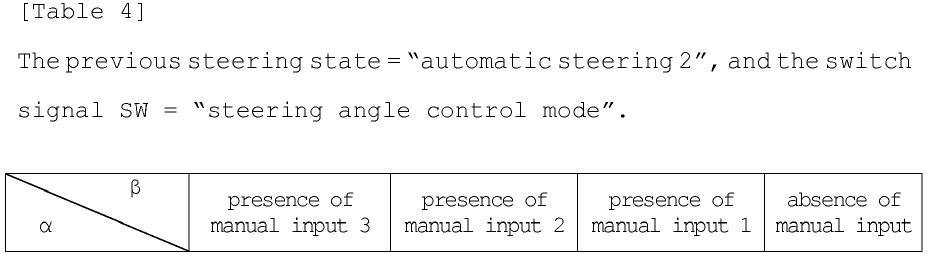

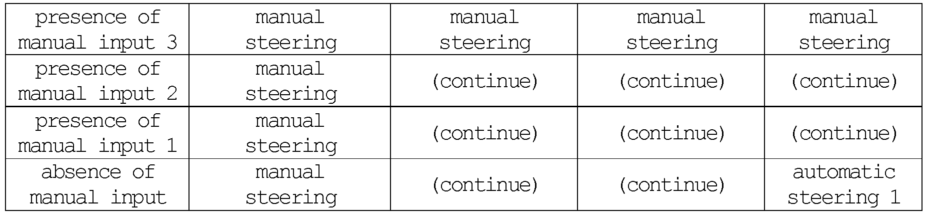

The steering state is judged in accordance with the above Table 2 to Table 4, and the judgment result is outputted to the gradual-change gain generating section 222 and the steering angle control section 700 as the steering state judgment signal Js. As well as the case of the second embodiment, the steering state may be judged without using the switch signal SW.

Compared with the operating example of the second embodiment, in the operating example of the third embodiment, the steering angle control section 700 outputs the target steering angle θt to the switch judging and gradual-change gain generating section 620. Other than the above operation, the operation of the switch judging and gradual-change gain generating section is different.

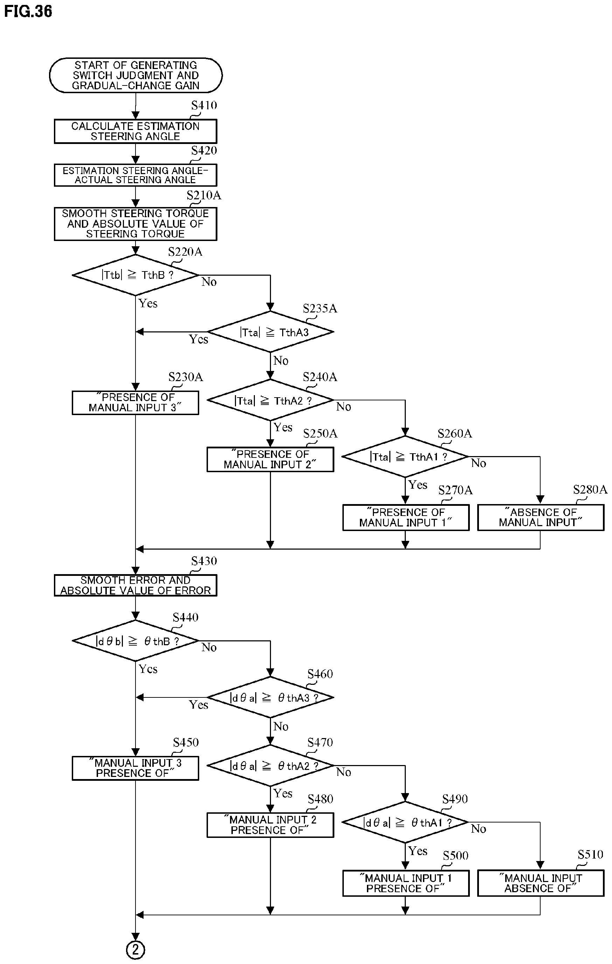

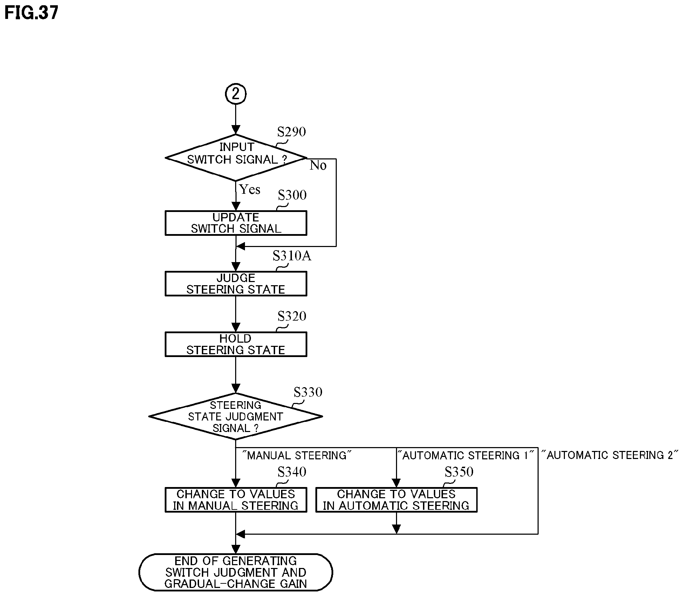

The operating example of the switch judging and gradual-change gain generating section 620 in the third embodiment will be described with reference to the flowcharts of FIGs.36 and 37. Moreover, the "manual steering", the "assist control mode" and the "manual steering" are set on the previous steering state, the held switch signal SW and the steering state judgment signal Js as an initial value in the steering state judging section 624, respectively.

The inputted steering torque Tt, the target steering angle θt and the actual steering angle θr are inputted into the manual input judging section 623 in the switch judging section 621. In the manual input judging section 623, the steering torque Tt is inputted into the judging section 623A, the target steering angle θt is inputted into the steering angle control model section 628 and the actual steering angle θr is inputted into the subtracting section 629.

The steering angle control model section 628 calculates the estimation steering angle θi from the target steering angel θt (Step S410). The estimation steering angle θi is addition-inputted into the subtracting section 629, and the actual steering angle θr is subtracted from the estimation steering angle θi (Step S420) . The error dθ (=θi-θr) is inputted into the judging section 623A.

The judging section 623A performs the manual input judgment by the same operation of the manual input judging section 523 in the second embodiment, and the judgment result is outputted to the steering state judging section 624 as the manual input judgment signal Jh1 (Steps S210A to S280A).

The error dθ is smoothed at the smoothing filter sections 625A and 625B in the manual input judging section 623A, and the absolute values |dθa| and |dθb| of the errors dθa and dθb after smoothing are obtained at the absolute value processing sections 626A and 626B in the manual input judging section 623A (Step S430) . The absolute values |dθa| and |dθb| are inputted into the judgment processing section 627. In the case that "the absolute value |dθb| is equal to or more than the threshold θthB" (Step S440), the judgment processing section 627 judges "the manual input 3 is performed" (Step S450). In the case that "the absolute value |dθb| is less than the threshold θthB" (Step S440), and "the absolute value |dθa| is equal to or more than the threshold |θthA3 " (Step S460), the judgment processing section 627 judges "presence of the manual input 3" (Step S450) . In the case that "the absolute value |dθb| is less than the threshold θthB" (Step S440), and "the absolute value |dθa| is equal to or more than the threshold θthA2 and is less than the threshold θthA3" (Step S470), the judgment processing section 627 judges "presence of the manual input 2" (Step S480) . In the case that "the absolute value |dθb| is less than the threshold θthB" (Step S440), and "the absolute value |dθa is equal to or more than the threshold θthA1 and is less than the threshold θthA2" (Step S490), the judgment processing section 627 judges "presence of the manual input 1" (Step S500) . In the case that "the absolute value |dθb| is less than the threshold θthB" (Step S440), and "the absolute value |dθa| is less than the threshold θthA1" (Step S490), the judgment processing section 627 judges "absence of the manual input" (Step S510). The judgment result is outputted to the steering state judging section 624 as the manual input judgment signal Jh2. The order of the operation of the judging section 523A and the operation of t the judging section 623A may be reversed, or the operations may be performed in parallel.

The steering state judging section 624 confirms whether the switch signal SW is inputted or not (Step S290) . In the case of inputting the switch signal SW, the steering state judging section 624 updates the value of the held switch signal SW (Step S300). The inputted manual input judgment signals Jh1 and Jh2 are set as the judgment signals α and β, respectively. Using the judgment signals α and β, the previous steering state and the switch signal SW, the judgment of the steering state is performed in accordance with the condition judgments of the Table 2 to Table 4 (Step S310A). The operations (from the Step S320 to the Step S350) after that are the same as the second embodiment.

The fourth embodiment of the present invention will be described.

In the fourth embodiment, the aspect for changing the steering angle command gradual-change gain Gfa4 is partially different from those of other gradual-change gains. The limit value that is used at the variable-rate limiting section in the steering angle control section is not set depending on the steering state judgment signal Js, but is set depending on the steering angle command gradual-change gain Gfa4. In the present embodiment, the above changes are applied to the third embodiment.

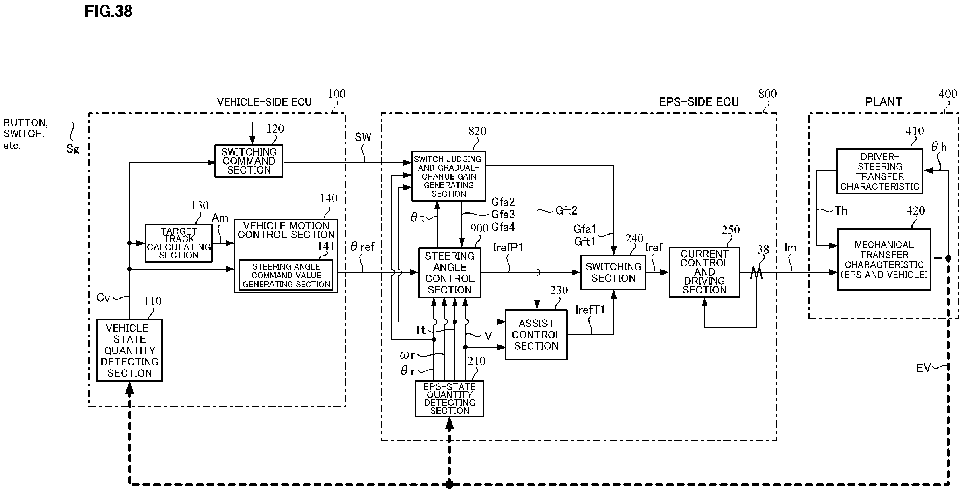

FIG.38 shows the configuration example of the whole vehicle system in the fourth embodiment. Compared with the configuration example of the third embodiment shown in FIG. 33, the switch judging and gradual-change gain generating section and the steering angle control section of the fourth embodiment are different from those of the third embodiment. The steering state judging signal Js is not outputted from the switch judging and gradual-change gain generating section 820 to the steering angle control section 900.

As well as the case of the third embodiment, in the switch judging and gradual-change gain generating section 820, the gradual-change gain generating section judges the steering state by the steering state judgment signal Js, and the gradual-change gains are set to the different values depending on the steering state. The judgment of the steering state is partially different from that of the third embodiment. That is, the values of the gradual-change gains are set by judging the steering state as the automatic steering state in the "automatic steering 1". In the "automatic steering 2", the steering angle command gradual-change gain Gfa4 is set by judging the steering state as the manual steering state, and other gradual-change gains are set to the previous values . In the "manual steering", the values of the gradual-change gains are set by judging the steering state as the manual steering state. Since the steering state is judged by the above manner, the change timing of the steering angle command gradual-change gain Gfa4 shown in FIG. 6A is different from those of other gradual-change gains. That is, when the steering state is transited from the automatic steering state to the manual steering state, at the time point t1, the gradual-change gains Gfal to Gfa3 begin to decrease when the steering state judgment signal Js is changed to the "manual steering", and the gradual-change gain Gfa4 begins to decrease when the steering state judgment signal Js is changed to the "manual steering" or the "automatic steering 2". In the case that the steering state is transited from the manual steering state to the automatic steering state, as well as the gradual-change gains Gfal to Gfa3, the gradual-change gain Gfa4 begins to increase when the steering state judgment signal Js is changed to the "automatic steering 1". In the switch state, in the case that the steering state judgment signal Js is changed to the "manual steering" or the "automatic steering 1", the operation of the gradual-change gain Gfa4 is the same as those of the gradual-change gains Gfa1 to Gfa3. However, in the case that the steering state judgment signal Js is changed to the "automatic steering 2", the gradual-change gains Gfa1 to Gfa3 are not changed and the gradual-change gain Gfa4 decreases.

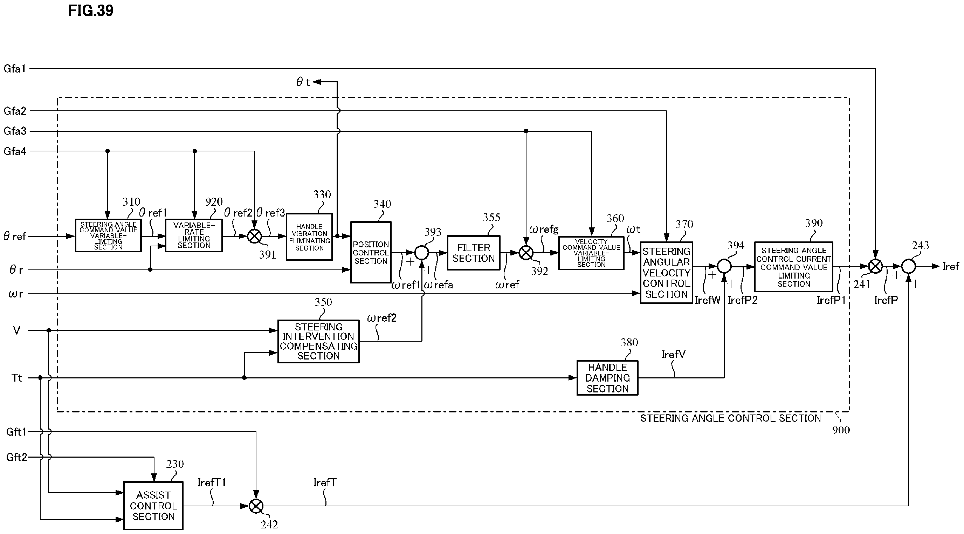

FIG.39 shows the configuration example of the steering angle control section 900. Not the steering state judgment signal Js but the steering angle command gradual-change gain Gfa4 is inputted into the variable-rate limiting section 920 in the steering angle control section 900.

The variable-rate limiting section 920 determines the difference from the steering angle command value θref1 in the preceding sampling as the change amount. In the case that the absolute value of the change amount is more than the predetermined value (the limit value), the variable-rate limiting section 920 performs the addition or the subtraction to the steering angle command value θref1 so that the absolute value of the change amount becomes the limit value, and outputs the result as the steering angle command value θref2. In the case that the absolute value of the change amount is equal to or less than the limit value, the variable-rate limiting section 920 outputs the steering angle command value θref1 as the steering angle command value θref2 without changing it. In order that the appropriate limit value is set in the automatic steering state and the manual steering state, the limit value is set depending on the steering angle command gradual-change gain Gfa4. The steering state is judged by the steering angle command gradual-change gain Gfa4, and the steering angle command value θref2 is not changed and is constant by using the predetermined limit value in the automatic steering state and setting the limit value to zero in the manual steering state. In the automatic steering state, the limit value is not set to the absolute value of the change amount, but the change amount may be limited by setting the upper limit value and the lower limit value to the change amount.

Here, the effects of the judgment of the steering state in the switch judging and gradual-change gain generating section 820 and the setting of the limit value of the variable-rate limiting section 920 depending on the steering angle command gradual-change gain Gfa4, which is determined based on the above judgment result, will be described with reference to the example. It is assumed that the judgment of the judging section 523A in the manual input judging section 623 is the same as that of the judging section 623A in the manual input judging section 623.

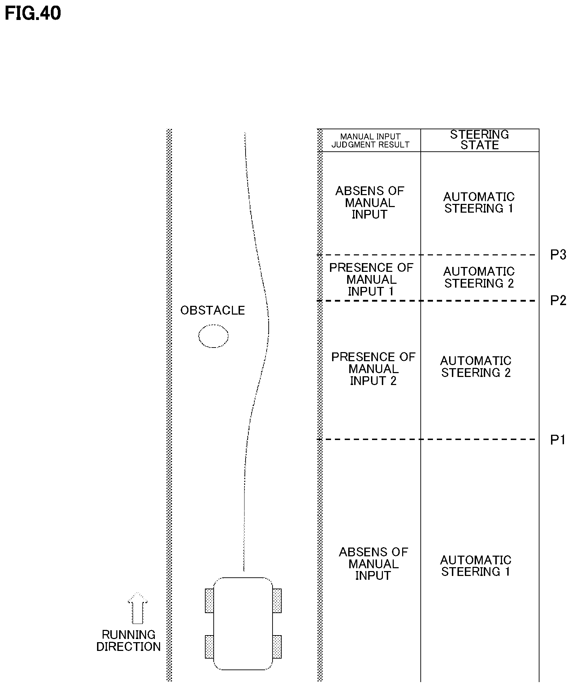

FIG.40 shows the manual input judgement result and the change behavior of the steering state in the case that the steering intervention by the driver is occurred in order to avoid an obstacle such as an object, a puddle and an ice on the road in the automatic driving.

In the case that the steering intervention that the vehicle slightly avoids to the right side of the obstacle, that is, the smaller manual input than the level which is judged as "presence of the manual input 3" is performed, the steering state is not transited to the "manual steering" and the steering angle control is continued. Therefore, because the vehicle-side ECU 100 updates the steering angle command value so as to steer the handle to the left side for returning the vehicle, which runs the right side by the steering intervention of the driver, to the center, the conflict between the steering intervention by the driver who runs the right side and the steering with the steering angle command value from the vehicle-side ECU 100 which the vehicle keeps to run the center of the lane, is occurred. From a viewpoint of prioritizing safety, in order to prioritize the steering intervention of the driver, the manual input judgment is changed to "presence of the manual input 2" at a point P1, the steering state becomes the state of the "automatic steering 2", the limit value of the variable-rate limiting section 920 is set to zero through the steering angle command gradual-change gain Gfa4 and the steering angle command value is set to a constant value. Thereby, the steering state is not affected by the update of the steering angle command value, and the smooth steering intervention can be realized.

After avoiding the obstacle, the steering intervention of the driver is weakened. Even when the manual input judgment is changed to "presence of the manual input 1" at a point P2, the steering state is still the "automatic steering 2". When the steering intervention of the driver is further weakened and the manual input judgment is changed to "absence of the manual input" at a point P3, the steering state is transited to the "automatic steering 1". Accordingly, the occurrence of the chattering that is switched between the "automatic steering 1" and the "automatic steering 2", or the like can be prevented by changing once the manual input judgment to "absence of the manual input 1". After transiting to the "automatic steering 1", the steering angle command value is changed to the normal value and the driving mode is returned to the automatic driving.

In this way, even when the steering intervention by the driver for avoiding the obstacle is performed, the steering state is not transited to the "manual steering" and the seamless steering can be realized.

Compared the operating example of the fourth embodiment with that of the third embodiment, the operations of the gradual-change gain section and the variable-rate limiting section are different.

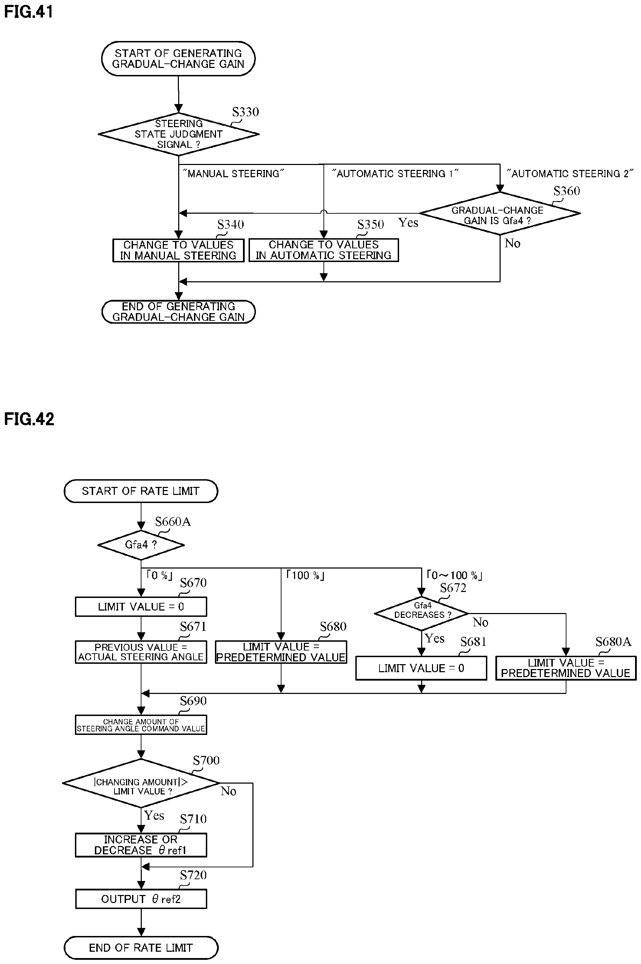

The operating example of the gradual-change gain generation in the gradual-change generating section of the fourth embodiment will be described with reference to the flowchart of FIG.41.

The gradual-change generating section verifies the value of the steering state judgment signal Js (Step S330). In the case that the steering state judgment signal Js is the "manual steering", the respective gradual-change gains (Gfal to Gfa4, Gft1 and Gft2) are transited to the values in the manual steering state (the gradual-change gains Gfa1 to Gfa4 are 0% and the gradual-change gains Gft1 and Gft2 are 100%) (Step S340) . In the case that the steering state judgment signal Js is the "automatic steering 1", the respective gradual-change gains (Gfal to Gfa4, Gft1 and Gft2) are transited to the values in the automatic steering state (the gradual-change gains Gfa1 to Gfa4 are 100% and the gradual-change gains Gft1 and Gft2 are 0%) (Step S350). In the case that the steering state judgment signal Js is the "automatic steering 2", when the gradual-change gain is the steering angle command gradual-change gain Gfa4 (Step S360), the same operations as the case of the "manual steering" are performed (Step S340). When the gradual-change gain is not the steering angle command gradual-change gain Gfa4 (Step S360), the respective gradual-change gain are not changed.

The operating example of the rate limit in the variable-rate limiting section 920 of the fourth embodiment will be described with reference to a flowchart of FIG.42.

The variable-rate limiting section 920 verifies the value of the steering angle command gradual-change gain Gfa4 (Step S660A). In the case that the gradual-change gain Gfa4 is 0%, the limit value is set to zero (Step S670) and the value of the stored steering angle command value θref1 in the preceding sampling is set to the value of the actual steering angle θr (Step S671). In the case that the gradual-change gain Gfa4 is 100%, the limit value is set to the predetermined value (Step S680). In the case that the gradual-change gain Gfa4 is between 0% and 100%, when the present gradual-change gain Gfa4 is less than the gradual-change gain Gfa4 in the preceding sampling (Step S672), the limit value is set to zero (Step S681). When the present gradual-change gain Gfa4 is equal to or more than the gradual-change gain Gfa4 in the preceding sampling (Step S672), the limit value is set to the predetermined value (Step S680A). The difference (the change amount) between the present steering angle command value θref1 and the steering angle command value θref1 in the preceding sampling is calculated (Step S690). In the case that the absolute value of the change amount is larger than the limit value (Step S700), the variable-rate limiting section 920 performs the addition or the subtraction to the steering angle command value θref1 (Step S710) so that the absolute value of the change amount becomes the limit value, and outputs the result as the steering angle command value θref2 (Step S720). In the case that the absolute value of the change amount is equal to or less than the limit value (Step S700), the variable-rate limiting section 920 outputs the steering angle command value θref1 as the steering angle command value θref2 without changing it (Step S720).

Other embodiments of the present invention will be described.

Although the multiplication of the velocity control gradual-change gain Gfa2 at the steering angular velocity control section 370 is performed to the control amount Ir1 outputted from the integrating section 373 in the first embodiment, it can be performed to the steering angle control current command value IrefW outputted from the subtracting section 375.

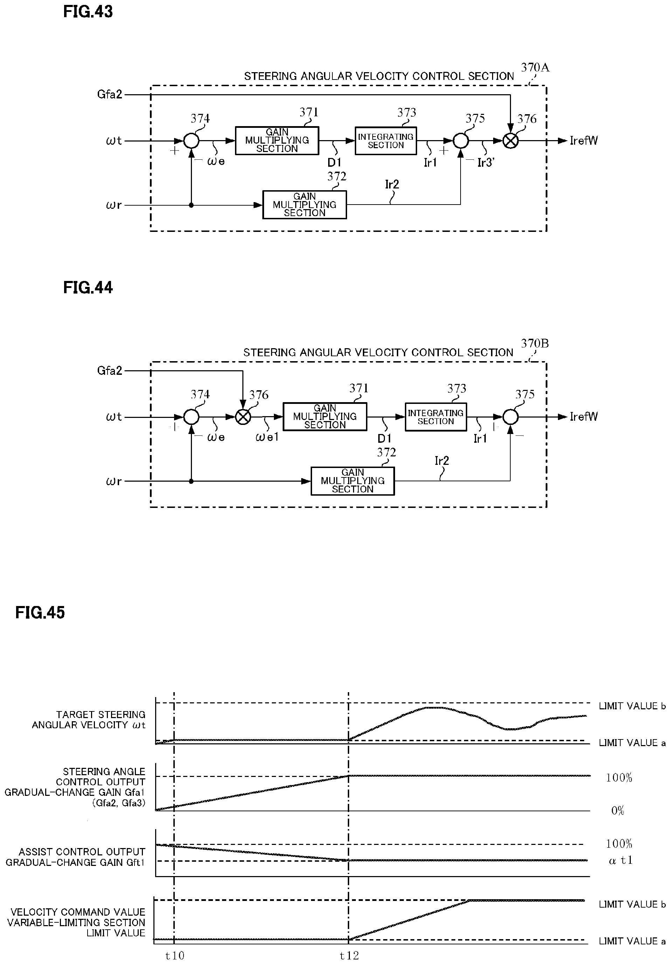

FIG. 43 shows a configuration example (the fifth embodiment) of the steering angular velocity control section in the case of multiplying the steering angle control current command value IrefW with the velocity control gradual-change gain Gfa2. Compared with the steering angular velocity control section 370 in the first embodiment shown in FIG.14, in a steering angular velocity control section 370A of the fifth embodiment, the multiplying section 376 is provided not behind the integrating section 373 but behind the subtracting section 375, and the other configurations are the same.

An operating example of the steering angular velocity control section 370A in the fifth embodiment performs the same operations as the operating example of the first embodiment shown in FIG.20 until the Step S890 where the integrating section 373 integrates the operation amount D1 and calculates the control amount Ir1, thereafter, the control amount Ir1 is inputted into the subtracting section 375, and a control amount Ir3' is calculated as a deviation (Ir1-Ir2) between the control amounts Ir1 and Ir2. The multiplying section 376 multiplies the control amount Ir3' with the velocity control gradual-change gain Gfa2, and outputs the multiplied result as the steering angle control current command value IrefW to the adding section 394. The operations (from the Step 930) after that are the same as the first embodiment.

It is possible to perform the multiplication of the velocity control gradual-change gain Gfa2 at another position in the steering angular velocity control section 370.

A configuration example (the sixth embodiment) of a steering angular velocity control section shown in FIG.44 multiplies the deviation ωe outputted from the subtracting section 374 with the velocity control gradual-change gain Gfa2. In comparison with the steering angular velocity control section 370 in the first embodiment shown in FIG.14, in a steering angular velocity control section 370B of the sixth embodiment, the multiplying section 376 is provided not behind the integrating section 373 but behind the subtracting section 374, and the other configurations are the same.

An operating example of the steering angular velocity control section 370B in the sixth embodiment performs the same operations as the operating example of the first embodiment shown in FIG.20 until the Step S870 where the subtracting section 374 calculates the deviation ωe between the target steering angular velocity ωt and the actual steering angular velocity ωr, and the deviation ωe is inputted into not the gain multiplying section 371 but the multiplying section 376. The multiplying section 376 multiplies the deviation ωe with the velocity control gradual-change gain Gfa2, and outputs the multiplied result as a deviation we1 to the gain multiplying section 371. The operations after that are the same as the first embodiment except to remove the Step S900.

In the above embodiments (the first to the sixth embodiments), the velocity command value variable-limiting section 360 sets the limit values depending on the velocity command gradual-change gain Gfa3, and switches the limit values when the gradual-change gain Gfa3 becomes the predetermined threshold. However, a velocity command value variable-limiting section uses the steering angle control output gradual-change gain Gfa1 instead of the gradual-change gain Gfa3, and may switch the limit values when the gradual-change gain Gfa1 becomes 100%. In a configuration (a seventh embodiment) of this case, the gradual-change gain Gfa1 is inputted into the velocity command value variable-limiting section instead of the gradual-change gain Gfa3, and the other configurations are the same as the other embodiments. In an operation of the seventh embodiment, a judgment operation of determining limit values at the velocity command value variable-limiting section (the step S830 shown in FIG. 20) is changed to a confirmation of whether or not the gradual-change gain Gfal is smaller than 100%. In the seventh embodiment, time changes of the target steering angular velocity ωt, the gradual-change gains and the limit value of the velocity command value variable-limiting section in the case of changing the state from the manual steering state to the automatic steering state, become as shown in FIG.45. Compared with the time changes shown in FIG. 30, the limit value of the velocity command value variable-limiting section gradually increases from the time point t12 where the gradual-change gain Gfal becomes 100%, and the target steering angular velocity ωt also increases correspondingly.

As well, with respect to the multiplications of the respective gradual-change gains (Gfal to Gfa4, Gft1 and Gft2) in the above embodiments (the first to the seventh embodiments), in such a case of focusing on a cost more than the effect by the multiplication of the gradual-change gain, it is possible to leave at least one multiplication and omit other multiplications. Further, the respective limiting sections (the steering angle command value variable-limiting section, the variable-rate limiting section, the velocity command value variable-limiting section and the steering angle control current command value limiting section) are also possible to omit in the same case or the like. When the steering angle command value variable-limiting section 310, the variable-rate limiting section 320 (or 920) and the multiplying section 391, in addition, the handle vibration eliminating section 330 are omitted, the steering angle command value θref is inputted into the position control section 340 as the target steering angle θt. When the multiplying section 392 and the velocity command value variable-limiting section 360 are omitted, the steering angular velocity command value ωref is inputted into the steering angular velocity control section 370 as the target steering angular velocity ωt.

### Explanation of Reference Numerals

- 1: handle (steering wheel)
- 2: column shaft (steering shaft, handle shaft)
- 10: torque sensor
- 12: vehicle speed sensor
- 13: battery
- 20: motor
- 21: rotational angle sensor
- 30: control unit (ECU)
- 31: current command value calculating section
- 33: current limiting section
- 34: compensation signal generating section
- 35: PI-control section
- 36: PWM-control section
- 37: inverter
- 38: motor current detector
- 100: vehicle-side ECU
- 110: vehicle-state quantity detecting section
- 120: switch command section
- 130: target track calculating section
- 140: vehicle motion control section
- 141: steering angle command value generating section
- 200, 600, 800: EPS-side ECU
- 210: EPS-state quantity detecting section
- 220, 620, 820: switch judging and gradual-change gain generating section
- 221, 621: switch judging section
- 222: gradual-change gain generating section
- 223, 523, 623: manual input judging section
- 224, 624: steering state judging section
- 225, 525A, 525B, 625A, 625B: smoothing filter section
- 226, 526A, 526B, 626A, 626B: absolute value processing section
- 227, 527, 627: judgment processing section
- 230: assist control section
- 240: switching section
- 250: current control and driving section
- 300, 700, 900: steering angle control section
- 310: steering angle command value variable-limiting section
- 320, 920: variable-rate limiting section
- 330: handle vibration eliminating section
- 340: position control section
- 341: proportional gain section
- 350: steering intervention compensating section
- 351: steering intervention phase compensating section
- 352: dead band setting section
- 353: compensating map section
- 355: filter section
- 360: velocity command value variable-limiting section
- 370, 370A, 370B, 470, 570: steering angular velocity control section
- 371, 372: gain multiplying section
- 373: integrating section
- 380: handle damping section
- 381: gain section
- 382: damping phase compensating section
- 390: steering angle control current command value limiting section
- 400: plant
- 523A, 623A: judging section
- 628: steering angle control model section

## Claims

1. An electric power steering apparatus that drives a motor based on a current command value and performs an assist control and a steering angle control to a steering system by driving and controlling said motor, comprising:
a steering angle control section that calculates a steering angle control current command value for said steering angle control based on at least a steering angle command value and an actual steering angle, and
a switch judging and gradual-change gain generating section that judges a steering state based on a manual input judgment and performs a switch of said steering state;
wherein said steering angle control section comprises a filter section that converts a steering angular velocity command value calculated from at least said steering angle command value and said actual steering angle into an extended steering angular velocity command value by using a feed-forward filter (an FF filter), and said steering angle control section calculates said steering angle control current command value based on said extended steering angular velocity command value and an actual steering angular velocity,
wherein said switch judging and gradual-change gain generating section comprises a manual input judging section that performs said manual input judgment to a steering torque by using a threshold, and
wherein said electric power steering apparatus calculates said current command value using at least said steering angle control current command value.

2. The electric power steering apparatus according to Claim 1,
wherein said manual input judging section performs said manual input judgment to said steering torque, which is smoothed with a smoothing filter, by using said threshold.

3. The electric power steering apparatus according to Claim 2,
wherein said manual input judging section has plural judgment results as a judgment result of presence of manual input, by using said plural thresholds to said steering torque.

4. The electric power steering apparatus according to Claim 1,
wherein said manual input judging section has said plural smoothing filters that have a different characteristic, calculates plural smoothing steering torques by smoothing said steering torque using said respective smoothing filters, and performs said manual input judgment to said respective smoothing steering torques by using said threshold.

5. The electric power steering apparatus according to Claim 4,
wherein said manual input judging section has plural judgment results as a judgment result of presence of manual input, by using said plural thresholds to at least one of said smoothing steering torques.

6. The electric power steering apparatus according to Claim 3 or 5,
wherein said switch judging and gradual-change gain generating section comprises:
a steering state judging section that judges said steering state based on a switch signal, which an operation mode is switched to an assist control mode or a steering angle control mode, and a judgment result of said manual input judging section; and
a gradual-change gain generating section that generates a gradual-change gain that adjusts a control amount of said assist control and a control amount of said steering angle control depending on said steering state.

7. The electric power steering apparatus according to Claim 6,
wherein said steering state judging section judges that said steering state is a manual steering in a case that said switch signal is said assist control mode, or in a case that said previous steering state is an automatic steering 1 or an automatic steering 2 and said judgment result of presence of manual input 3 is judged.

8. The electric power steering apparatus according to Claim 7,
wherein said steering state judging section judges that said steering state is said automatic steering 1 in a case that said previous steering state is said manual steering or said automatic steering 2, said switch signal is said steering angle control mode and said judgment result of absence of manual input, is judged.

9. The electric power steering apparatus according to Claim 7 or 8,
wherein said gradual-change gain generating section sets said gradual-change gain to a first predetermined gain value against said automatic steering 1, sets said gradual-change gain to a second predetermined gain value against said manual steering, changes said gradual-change gain to said first gain value in a case that said steering state changes to said automatic steering 1, and changes said gradual-change gain to said second gain value in a case that said steering state changes to said manual steering.

10. An electric power steering apparatus that drives a motor based on a current command value and performs an assist control and a steering angle control to a steering system by driving and controlling said motor, comprising:
a steering angle control section that calculates a steering angle control current command value for said steering angle control based on at least a steering angle command value and an actual steering angle; and
a switch judging and gradual-change gain generating section that judges a steering state based on a manual input judgment and performs a switch of said steering state,
wherein said steering angle control section comprises a filter section that converts a steering angular velocity command value calculated from at least said steering angle command value and said actual steering angle into an extended steering angular velocity command value by using a feed-forward filter (an FF filter), and calculates said steering angle control current command value based on said extended steering angular velocity command value and an actual steering angular velocity,
wherein said switch judging and gradual-change gain generating section comprises a manual input judging section having a first judging section which performs said manual input judgment by using an estimation steering angle, which is estimated based on said steering angle command value, and an error threshold to an error of said actual steering angle, and
wherein said electric power steering apparatus calculates said current command value using at least said steering angle control current command value.

11. The electric power steering apparatus according to Claim 10,
wherein said first judging section has plural smoothing filters for an error, which have a different characteristic, calculates plural smoothing errors by smoothing said error using said respective smoothing filters for an error, and performs said manual input judgment to said respective smoothing errors by using said error threshold.

12. The electric power steering apparatus according to Claim 11,
wherein said first judging section has plural judgment results as a judgment result of presence of manual input, by using said plural error thresholds to at least one of said smoothing errors.

13. The electric power steering apparatus according to any one of Claims 10 to 12,
wherein said manual input judging section further includes a second judging section that performs said manual input judgment to a steering torque by using a torque threshold.

14. The electric power steering apparatus according to Claim 13,
wherein said second judging section has plural smoothing filters for a torque that have a different characteristic, calculates plural smoothing steering torques by smoothing said steering torque using said respective smoothing filters for a torque, and performs said manual input judgment to said respective smoothing steering torques by using said torque threshold.

15. The electric power steering apparatus according to Claim 14,
wherein said second judging section has plural judgment results as a judgment result of presence of manual input, by using said plural torque thresholds to at least one of said smoothing steering torques.

16. The electric power steering apparatus according to Claim 15,
wherein said switch judging and gradual-change gain generating section comprises:
a steering state judging section that judges said steering state based on a switch signal, which an operation mode is switched to an assist control mode or a steering angle control mode, a first judgment result of said first judging section, and a second judgment result of said second judging section; and
a gradual-change gain generating section that generates a gradual-change gain that adjusts a control amount of said assist control and a control amount of said steering angle control depending on said steering state.

17. The electric power steering apparatus according to Claim 16,
wherein said steering state judging section judges that said steering state is a manual steering in a case that said switch signal is said assist control mode, or in a case that said previous steering state is an automatic steering 1 or an automatic steering 2, and said first judgment result or said second judgment result of presence of manual input 3, is judged.

18. The electric power steering apparatus according to Claim 17,
wherein said steering state judging section judges that said steering state is said automatic steering 1 in a case that said previous steering state is said manual steering or said automatic steering 2, said switch signal is said steering angle control mode, and said first judgment result and said second judgment result of absence of manual input, are judged.

19. The electric power steering apparatus according to Claim 17 or 18,
wherein said gradual-change gain generating section sets said gradual-change gain to a first predetermined gain value against said automatic steering 1, sets said gradual-change gain to a second predetermined gain value against said manual steering, changes said gradual-change gain to said first gain value in a case that said steering state changes to said automatic steering 1, and changes said gradual-change gain to said second gain value in a case that said steering state changes to said manual steering.

20. The electric power steering apparatus according to Claim 19,
wherein said gradual-change gain generating section generates a steering angle command gradual-change gain, which is multiplied with said steering angle command value, and changes said steering angle command gradual-change gain to said second gain value in a case that said steering state is changed to said automatic steering 2.

21. The electric power steering apparatus according to any one of Claims 7 to 9 and Claims 17 to 20,
wherein said steering angle control section further includes a variable-rate limiting section that limits a change amount of said steering angle command value by using a limit value, which is set depending on said steering state.

22. The electric power steering apparatus according to Claim 21,
wherein said variable-rate limiting section changes said limit value to zero in a case that said steering state changes from said automatic steering 1 to said automatic steering 2 or said manual steering.

23. The electric power steering apparatus according to Claim 21 or 22,
wherein said variable-rate limiting section changes said limit value to a predetermined value in a case that said steering state changes from a state other than said automatic steering 1 to said automatic steering 1.

24. The electric power steering apparatus according to any one of Claims 1 to 5 and Claims 113 to 15,
wherein said steering angle control section comprises:
a position control section that calculates a steering angular velocity command value based on said steering angle command value and said actual steering angle; and
a steering angular velocity control section that calculates said steering angle control current command value based on said extended steering angular velocity command value and said actual steering angular velocity.

25. The electric power steering apparatus according to Claim 24,
wherein said steering angle control section further includes a steering intervention compensating section that obtains a compensatory steering angular velocity command value for a steering intervention compensation depending on said steering torque, and said steering angle control section compensates said steering angular velocity command value by using said compensatory steering angular velocity command value,
wherein said steering intervention compensating section includes a compensation map section having a steering intervention compensating map that determines a characteristic of said compensatory steering angular velocity command value to said steering torque.

26. The electric power steering apparatus according to any one of Claims 10 to 12,
wherein said steering angle control section comprises:
a position control section that calculates a steering angular velocity command value based on said steering angle command value and said actual steering angle; and
a steering angular velocity control section that calculates said steering angle control current command value based on said extended steering angular velocity command value and said actual steering angular velocity.

27. The electric power steering apparatus according to Claim 26,
wherein said steering angle control section further includes a steering intervention compensating section that obtains a compensatory steering angular velocity command value for a steering intervention compensation depending on said steering torque, and compensates said steering angular velocity command value by using said compensatory steering angular velocity command value,
wherein said steering intervention compensating section includes a compensation map section having a steering intervention compensating map that determines a characteristic of said compensatory steering angular velocity command value to said steering torque.

28. The electric power steering apparatus according to Claim 25 or 27,
wherein said steering intervention compensating map has a characteristic that said compensatory steering angular velocity command value also increases as said steering torque increases.

29. The electric power steering apparatus according to any one of Claims 25, 27 and 28,
wherein said steering intervention compensating map has a characteristic that said compensatory steering angular velocity command value decreases as said vehicle speed increases.

30. The electric power steering apparatus according to Claim 25 or 27,
wherein said steering intervention compensating section further includes a steering intervention phase compensating section that performs a phase compensation to said steering torque, and said steering intervention compensating section obtains said compensatory steering angular velocity command value by using said steering torque through said steering intervention phase compensating section and said compensating map section.

31. The electric power steering apparatus according to any one of Claims 24 to 30,
wherein said position control section includes a proportional gain section that calculates said steering angular velocity command value by multiplying a deviation between said steering angle command value and said actual steering angle with a proportional gain.

32. The electric power steering apparatus according to any one of Claims 24 to 31,
wherein said steering angular velocity control section calculates said steering angle control current command value by an integral proportional control (an I-P control) by using said steering angular velocity command value and said actual steering angular velocity.

33. The electric power steering apparatus according to any one of Claims 1 to 9 and Claims 13 to 32 further including an assist control section that calculates an assist control current command value for said assist control based on at least said steering torque,
wherein said electric power steering apparatus calculates said current command value by said assist control current command value and said steering angle control current command value.

34. The electric power steering apparatus according to any one of Claims 10 to 12 further including an assist control section that calculates an assist control current command value for said assist control based on at least said steering torque,
wherein said electric power steering apparatus calculates said current command value by said assist control current command value and said steering angle control current command value.
